# FASCICULE DE BREVET EUROPEEN

(11) **EP 2 504 102 B1**
(45) Date de publication et mention de la délivrance du brevet: **06.02.2019**
(21) Numéro de dépôt: 10799096.2
(22) Date de dépôt: 23.11.2010
(51) Int. Cl.: B01L 1/02, B08B 15/02, B25J 21/02, F16J 13/02, G21F 7/005, F16J 13/18, F16J 13/20, F16J 13/22

(54) **ENCEINTE POUR DISPOSITIF DE JONCTION ÉTANCHE ET DISPOSITIF DE TRANSFERT ASEPTIQUE.**
GEHÄUSE FÜR DICHTE VERBINDUNGSVORRICHTUNG UND ASEPTISCHE TRANSFERVORRICHTUNG
HOUSING FOR TIGHT CONNECTION DEVICE AND ASEPTIC TRANSFER DEVICE

(30) Priorité: 23.11.2009 FR 0958270
(43) Date de publication de la demande: 03.10.2012
(73) Titulaire: Sartorius Stedim Aseptics, 65100 Lourdes (FR)
(72) Inventeur: ARMAU, Stéphanie, F-Ossun 65380 (FR); GAY, Isabelle, F-13124 Peypin (FR); NODIN, Gaëlle, F-83470 Saint Maximin La Sainte Baume (FR)
(74) Mandataire: Derambure, Christian
(86) Numéro de dépôt international: PCT/FR2010/052491
(87) Numéro de publication internationale: WO 2011/061464

(56) Documents cités:
- EP-A1- 0 586 307
- EP-A2- 0 830 896
- WO-A1-95/34078
- WO-A1-03/041087
- US-A- 3 489 298

## Description

L'invention concerne une enceinte destinée à faire partie, avec une seconde enceinte, d'un dispositif de jonction étanche et d'un dispositif de transfert aseptique.

On connaît déjà des dispositifs de transfert aseptique de type à double porte. A titre purement exemplatif, on peut citer les dispositifs connus sous la maque BIOSAFE® et les dispositifs de jonction étanche entre une première enceinte et une seconde enceinte isolées d'un milieu extérieur décrits dans le document EP-A-0688020.

L'invention vise la dite première enceinte de dispositifs de ce type. Dans l'ensemble du texte, cette enceinte est dénommée le plus souvent « enceinte » ou parfois « première enceinte » notamment en vue de la distinguer de l'autre enceinte du dispositif de jonction et du dispositif de transfert, cette autre enceinte étant dénommée « seconde enceinte ». Il est entendu que le terme « enceinte » sans autre précision et l'expression « première enceinte » sont synonymes et désignent le même objet.

Une première enceinte connue telle que celle mise en oeuvre dans le domaine biopharmaceutique est typiquement fixe, rigide, et de relativement grande taille et comporte :
▪ une structure incluant une paroi fermée limitant un espace intérieur,
▪ au moins une ouverture - dont le diamètre peut être typiquement de l'ordre de 10 à 40 centimètres - ménagée dans la paroi et limitée par une bride annulaire dont la face extérieure est apte à assurer le plaquage hermétique sur elle-même de la face extérieure d'une seconde bride complémentaire appartenant à la seconde enceinte,
▪ des moyens de maintien amovible, associés au moins pour partie à la bride, aptes à maintenir de façon amovible la bride et la seconde bride plaquées l'une contre l'autre par leurs faces extérieures,
▪ une porte supportée par la structure par l'intermédiaire de moyens porteurs, de nature mécanique, mobiles ou déformables, dont le vantail est agencé et monté de façon apte à pouvoir être déplacé pour se trouver soit à l'état fermé où il coopère avec la bride en fermant l'ouverture soit à l'état ouvert où il est dégagé de la bride et placé dans l'espace intérieur en ouvrant l'ouverture, et dont la face extérieure est apte à assurer le plaquage hermétique sur elle-même de la face extérieure du vantail d'une seconde porte complémentaire appartenant à la seconde enceinte,
▪ des moyens de solidarisation amovible associés au moins pour partie à la porte, aptes à maintenir de façon amovible le vantail et le second vantail plaqués l'un contre l'autre par leurs faces extérieures,
▪ des moyens de manoeuvre de déplacement aptes à déplacer le vantail, auquel est solidarisé le second vantail, entre ses états fermé et ouvert, et des moyens de commande des moyens de manoeuvre de déplacement,
▪ et, lorsque le vantail est à l'état ouvert, un espace d'entrée/sortie dans/de l'espace intérieur, en forme générale de tronc de cylindre, de cône ou de pyramide, s'étendant dans l'espace intérieur au moins sensiblement axialement à partir de l'ouverture et de la bride, apte à permettre de faire passer un certain contenu dans/hors de l'espace intérieur de l'une à l'autre des deux enceintes.

La seconde enceinte est typiquement un conteneur déplaçable, à usage unique, flexible au moins pour partie, et de taille plus petite et comporte la seconde paroi pourvue de la seconde ouverture limitée par la seconde bride annulaire formant d'une part interface avec la première bride, d'autre part siège pour la seconde porte dont le vantail est monté à déplacement et agencé pour se trouver à l'état fermé ou à l'état ouvert où, respectivement, il ferme ou ouvre la seconde ouverture.

Dans le cas de la réalisation connue sous la marque BIOSAFE®, les moyens porteurs et les moyens de manoeuvre de déplacement de la première porte et de son vantail comprennent une charnière dont l'axe - vertical et latéral - est situé dans la première enceinte elle-même (l'espace intérieur de cette première enceinte), dans ou à proximité de la face intérieure de sa paroi, à proximité de son ouverture et de sa bride, le pivotement autour de la charnière étant réalisé de façon manuelle ou motorisée (vérin, moteur...). À l'état fermé, le vantail est effacé dans ou au voisinage du plan de la paroi, de l'ouverture et de la bride. À l'état ouvert, le vantail est saillant, notamment disposé plus ou moins perpendiculairement au plan de la paroi, de l'ouverture et de la bride. Le déplacement du vantail entre son état fermé et son état ouvert (et inversement) est de l'ordre d'un tiers de tour. Quant aux moyens de manoeuvre de déplacement, tels que vérin, moteur..., ils sont aptes à déplacer le vantail à rotation sur cette course.

Dans les réalisations décrites dans le document EP-A-2091051 où l'axe est également vertical et latéral, dans les documents EP-A-1 141 974, EP-A-1 454 328, EP-A-0 730 907, EP-A-0 830 896 où l'axe est horizontal inférieur (en dessous de l'ouverture et de la bride) et dans le document EP-A-0 662 373, où l'axe est horizontal supérieur, à l'état ouvert, le vantail est également saillant et plus ou moins perpendiculaire au plan de la paroi, de l'ouverture et de la bride.

Lorsque les deux enceintes communiquent entre elles par leurs ouvertures respectives à l'état ouvert, l'espace d'entrée/sortie fait partie d'un espace de communication entre les deux enceintes permettant de faire passer un certain contenu de l'une à l'autre des deux enceintes et, ainsi, de le transférer de l'une à l'autre des enceintes.

Dans ces réalisations, à l'état ouvert du vantail, le vantail est adjacent latéralement à la limite latérale de l'espace d'entrée/sortie, ce qui peut poser le problème que le vantail soit une entrave à l'utilisation du dispositif de jonction étanche et du dispositif de transfert aseptique parce que vantail obstrue le passage du certain contenu de l'une à l'autre des deux enceintes et, également, parce que le vantail puisse être atteint par le certain contenu lors de son passage dans l'espace d'entrée/sortie, avec des risques de détérioration ou de contamination.

Des transferts, tels que ceux dont il s'agit peuvent être nécessaires dans nombre de domaines techniques, notamment mais non exclusivement le domaine biopharmaceutique. L'invention s'intéresse tout spécialement à ce domaine, comme à ceux qui peuvent être considérés comme analogues au regard des exigences imposées.

Des transferts, tels que ceux ici considérés, interviennent le plus souvent dans le cadre de processus plus complexes dans lesquels le certain contenu subit une ou plusieurs opérations avant et/ou après le transfert. Ces opérations consistent en fabrication, assemblage, traitement, manipulation, utilisation, mesure, contrôle, analyse, ou autre...

Dans le cas d'une ligne opératoire, il peut être prévu une enceinte comportant une paroi pourvue d'une même pluralité d'ouvertures et de portes, ainsi que de dispositifs de jonction étanche avec une multiplicité de secondes enceintes.

Comme le rappelle le document EP-A-1141672, l'homme du métier sait qu'avec le type de dispositif de transfert aseptique considéré, il existe ce que l'on appelle une « ligne critique » à contamination résiduelle par le milieu extérieur aux deux enceintes. Il est possible que cette ligne vienne au contact du milieu extérieur se trouvant dans le passage entre les deux enceintes ou au contact du contenu traversant ce passage pour être transférés d'une enceinte à l'autre, avec pour conséquence, une contamination. Cette ligne critique est parfois appelée « zone critique » ou « ring of concern » (voir PIC/S - Pharmaceutical Inspection Convention - *RECOMMENDATION* - *ISOLATORS USED FOR ASEPTIC PROCESSING AND STERILITY TESTING).*

Une ligne critique intérieure se trouve sur la face extérieure de la première porte, plus précisément de son vantail, en contact avec le milieu extérieur et non recouverte par la face extérieure de la seconde porte, plus précisément de son vantail, lorsque les deux vantaux sont plaqués l'un contre l'autre. Une ligne critique extérieure se trouve sur la face extérieure de la seconde bride en contact avec le milieu extérieur et non recouverte par la face extérieure de la première bride, lorsque les deux brides sont plaquées l'une contre l'autre.

Des réalisations telles que celles décrites dans les documents EP-A-1 141 974, EP-A-1 454 328, EP-A-0 730 907, EP-A-0 830 896, EP-A-0 662 373 et EP-A-2091051 ont pour inconvénient que dans son état ouvert le vantail est proche de l'ouverture de l'enceinte et de l'espace d'entrée/sortie, de sorte que le vantail peut être atteint par le certain contenu lors de son passage dans l'espace d'entrée/sortie, avec les risques inhérents de détérioration, de contamination...

Il a été proposé plusieurs solutions en vue de pallier le risque de contamination dans les lignes critiques, risque qui est également mentionné dans ISOLATION TECHNOLOGY - A PRACTICAL GUIDE-, publié chez CRC Press en 2004.

Le document EP-A-0960698 prévoit des moyens de décontamination utilisant des rayonnements ultraviolets, ultraviolets puisés, ou de lumière puisés. Le document EP-A-0662373 prévoit qu'un anneau à bride du dispositif de transfert aseptique comprend un élément annulaire résistif de chauffage. Des variantes de la technologie par chauffage sont décrites dans les documents EP-A-730907 et EP-A-830907. La technologie de stérilisation par chaleur sèche a été indiquée comme étant la solution préférée selon la présentation faite par le Barrier Users Group Symposium (BUGS) à la conférence des 17 et 18 janvier 1995. Le document EP-A-1454328 décrit, quant à lui, un dispositif de transfert aseptique qui comporte un dispositif de protection de la seule ligne critique extérieure.

L'état de la technique comprend également les documents US 3489298, EP 0586307, EP 0830 896, WO 03/041087, WO 95/34078, FR2833745, FR 2787 235, US 2009/212054 et WO 96/21615,. Toutefois, aucun de ces documents ne prévoit que l'enceinte soit telle :
- dune part, que les moyens porteurs et les moyens de manoeuvre de déplacement soient agencés de manière qu'à l'état ouvert du vantail, le vantail soit substantiellement espacé au-delà de la limite de l'espace d'entrée/sortie, et qu'ainsi un espace d'écartement vide soit ménagé entre l'espace d'entrée/sortie et le vantail à l'état ouvert, au-delà de la limite latérale et de la limite d'extrémité distale de l'espace d'entrée/sortie opposée à l'ouverture et à la bride ;,
- et d'autre part, que les moyens porteurs et les moyens de manoeuvre de déplacement, structurellement intégrés à la porte, constituent des moyens de protection contre les risques de contamination pour la ligne critique intérieure, constitués par l'espace d'écartement de taille appropriée formé et placé entre l'espace d'entrée/sortie et la ligne critique annulaire intérieure, de sorte que le vantail soit normalement non atteignable par le certain contenu lors de son passage dans l'espace d'entrée/sortie.

Le problème à la base de l'invention est de pourvoir une (première) enceinte destinée à faire partie d'un dispositif de jonction étanche et d'un dispositif de transfert aseptique avec une seconde enceinte d'une structure telle que le (premier) vantail de la (première) porte de la (première) enceinte à l'état ouvert ne soit pas une entrave à l'utilisation du dispositif de jonction étanche et du dispositif de transfert aseptique, notamment n'entrave pas le passage du certain contenu de l'une à l'autre des deux enceintes, tout spécialement le passage du certain contenu dans l'espace d'entrée/sortie de la première enceinte et, également que le premier vantail ne puisse être atteint par le certain contenu lors de son passage dans l'espace d'entrée/sortie, avec l'avantage de pallier les risques de détérioration ou contamination lorsque tel n'est pas le cas. En d'autres termes, l'invention vise à faire en sorte que l'espace d'entrée/sortie et l'espace de communication soient dégagés, ce qui est particulièrement utile, par exemple, pour le passage d'un certain contenu en poudre, lorsque l'on utilise un cône de transfert.

Un autre aspect du problème à la base de l'invention est de réaliser une enceinte dont l'ouverture a un diamètre plus grand que les ouvertures actuellement typiques - de l'ordre de 10 à 40 centimètres -. Une telle ouverture plus large accroît le problème d'entrave précédemment exposé.

À cet effet, et selon un premier aspect, l'invention a pour objet une enceinte spécialement destinée à être associée dans un dispositif de jonction étanche avec une seconde enceinte du type comportant :
▪ une structure incluant une paroi fermée limitant un espace intérieur,
▪ au moins une ouverture ménagée dans la paroi et limitée par une bride annulaire dont la face extérieure est apte à assurer le plaquage hermétique sur elle-même de la face extérieure d'une seconde bride complémentaire appartenant à la seconde enceinte,
▪ des moyens de maintien amovible, associés au moins pour partie à la bride, aptes à maintenir de façon amovible la bride et la seconde bride plaquées l'une contre l'autre par leurs faces extérieures,
▪ une porte supportée par la structure par l'intermédiaire de moyens porteurs mobiles ou déformables, dont le vantail est agencé et monté de façon apte à pouvoir être déplacé pour se trouver soit à l'état fermé où il coopère avec la bride en fermant l'ouverture soit à l'état ouvert où il est dégagé de la bride et placé dans l'espace intérieur en ouvrant l'ouverture, et dont la face extérieure est apte à assurer le plaquage hermétique sur elle-même de la face extérieure du vantail d'une seconde porte complémentaire appartenant à la seconde enceinte,
▪ des moyens de solidarisation amovible associés au moins pour partie à la porte, aptes à maintenir de façon amovible le vantail et le second vantail plaqués l'une contre l'autre par leurs faces extérieures,
▪ des moyens de manoeuvre de déplacement aptes à déplacer le vantail entre ses états fermé et ouvert, et des moyens de commande des moyens de manoeuvre de déplacement,
▪ et, lorsque le vantail est à l'état ouvert, l'entrée/sortie de l'enceinte étant dégagée, un espace d'entrée/sortie dans/de l'espace intérieur, en forme générale de tronc de cylindre, de cône ou de pyramide, s'étendant dans l'espace intérieur au moins sensiblement axialement à partir de l'ouverture et de la bride, cet espace d'entrée/sortie faisant partie d'un espace de communication entre les deux enceintes associées et étant apte à permettre de faire passer un certain contenu dans/hors de l'espace intérieur, de l'une à l'autre des deux enceintes.
▪ une ligne critique annulaire intérieure de risque de contamination existant sur la face extérieure du vantail en contact avec le milieu extérieur et non recouverte par la face extérieure du vantail, lorsque les vantaux sont plaqués l'un contre l'autre,

Cette enceinte est telle :
- dune part que les moyens porteurs et les moyens de manoeuvre de déplacement sont agencés de manière qu'à l'état ouvert du vantail, le vantail soit substantiellement espacé au-delà de la limite de l'espace d'entrée/sortie, un espace d'écartement vide étant ainsi ménagé entre l'espace d'entrée/sortie et le vantail à l'état ouvert, au-delà de la limite latérale et de la limite d'extrémité distale de l'espace d'entrée/sortie opposée à l'ouverture et à la bride ;,
- et d'autre part, que les moyens porteurs et les moyens de manoeuvre de déplacement, structurellement intégrés à la porte, constituent des moyens de protection contre les risques de contamination pour la ligne critique intérieure constitués par l'espace d'écartement de taille appropriée formé et placé entre l'espace d'entrée/sortie et la ligne critique annulaire intérieure, de sorte que le vantail soit normalement non atteignable par le certain contenu lors de son passage dans l'espace d'entrée/sortie.

Selon une caractéristique, la porte est supportée par l'intermédiaire de moyens porteurs, de sorte que le vantail est agencé et monté de façon apte à pouvoir être déplacé pour se trouver à l'état ouvert soit dans un état ouvert primaire où est ménagé un espace d'écartement primaire soit dans un état ouvert final où est ménagé un espace d'écartement final, plus grand que l'espace d'écartement primaire.

Ainsi, on réussit à écarter le (premier) vantail de la (première) porte de la (première) enceinte du passage du certain contenu de l'une à l'autre des deux enceintes, on dégage ce passage de sorte à faciliter le transfert du certain contenu et on peut envisager d'avoir une (première) ouverture plus grande que celles couramment connues jusqu'à présent, le (premier) vantail étant lui-aussi plus grand, sans préjudice pour le passage et le transfert du certain contenu.

Selon les cas, l'espace d'écartement est un espace vide ou, au contraire, l'enceinte comporte également une paroi de séparation fixe ou mobile qui, à l'état ouvert du vantail, est placée et s'étend, au moins pour partie, entre le vantail et l'espace d'entrée/sortie. Dans ce dernier cas, cette paroi de séparation, mobile, peut être associée structurellement à la porte et/ou à ses moyens porteurs ou de manoeuvre.

Selon une réalisation, à l'état ouvert du vantail, l'écartement entre toute zone du vantail et la limite la plus proche de l'espace d'entrée/sortie est au moins égal au quart de la taille de l'espace d'entrée/sortie comptée selon la direction de cet écartement. Plus spécialement, cet écartement est au moins égal à la moitié de la taille de l'espace d'entrée/sortie comptée selon la direction de cet écartement. Plus spécialement encore, cet écartement est au moins égal à la taille de l'espace d'entrée/sortie comptée selon la direction de cet écartement.

Selon les cas, à l'état ouvert du vantail, le vantail est disposé dans une position au moins sensiblement parallèle ou au moins sensiblement orthogonale à l'ouverture, à la bride et à la position du vantail à l'état fermé, ou, respectivement, dans une position au moins sensiblement orthogonale ou au moins sensiblement parallèle à l'axe de l'espace d'entrée/sortie.

Selon une réalisation, à l'état ouvert du vantail, le vantail est disposé dans une position au moins sensiblement en regard de l'ouverture, de la bride et de la position du vantail à l'état fermé. Selon une autre réalisation, il est disposé dans une position latérale par rapport à l'ouverture, à la bride et à la position du vantail à l'état fermé.

Selon une caractéristique, les moyens porteurs et les moyens de manoeuvre de déplacement de la porte sont agencés pour être aptes à déplacer le vantail entre ses états fermé et ouvert ou ouvert primaire, selon un mouvement comprenant un mouvement initial d'écartement du vantail de la bride qui est un mouvement au moins sensiblement de translation initiale le long d'un axe au moins sensiblement orthogonal à l'ouverture, à la bride et à la position du vantail à l'état fermé, ou un mouvement de rotation initiale autour d'un axe au moins sensiblement parallèle à l'ouverture, à la bride et à la position du vantail à l'état fermé.

Selon une caractéristique, les moyens porteurs et les moyens de manoeuvre de déplacement de la porte sont agencés pour être aptes à déplacer le vantail entre ses états fermé et ouvert ou ouvert primaire et ouvert final, selon un mouvement comprenant un mouvement initial d'écartement du vantail de la bride et au moins un mouvement ultérieur qui est un mouvement ultérieur de translation et/ou au moins un mouvement ultérieur de rotation.

Selon différentes possibilités, les moyens porteurs et les moyens de manoeuvre de déplacement de la porte sont agencés pour être aptes à déplacer le vantail selon un mouvement ultérieur de translation le long d'un axe de translation au moins sensiblement rectiligne, notamment au moins sensiblement parallèle à ou au moins sensiblement orthogonal à, ou incliné par rapport à l'ouverture, à la bride et à la position du vantail à l'état fermé ou le long d'un axe de translation curviligne.

Selon d'autres possibilités, les moyens porteurs et les moyens de manoeuvre de déplacement de la porte sont agencés pour être aptes à déplacer le vantail selon un mouvement ultérieur de rotation autour d'un axe au moins sensiblement parallèle à ou au moins sensiblement orthogonal à l'ouverture, à la bride et à la position du vantail à l'état fermé.

À cet effet, et selon les différentes possibilités exposées ci-dessus, les moyens porteurs et les moyens de manoeuvre de déplacement de la porte comprennent des moyens d'écartement initial du vantail de la bride qui sont des moyens de translation le long d'un axe au moins sensiblement orthogonal à l'ouverture, à la bride et à la position du vantail à l'état fermé, ou des moyens de rotation autour d'un axe au moins sensiblement parallèle à l'ouverture, à la bride et à la position du vantail à l'état fermé. Ces moyens porteurs et ces moyens de manoeuvre de déplacement de la porte comprennent des moyens d'écartement initial du vantail de la bride et des moyens de déplacement ultérieur qui sont des moyens de translation et/ou des moyens de rotation.

Selon différentes possibilités, les moyens porteurs et les moyens de manoeuvre de déplacement de la porte comprennent des moyens de déplacement ultérieur de translation le long d'un axe de translation au moins sensiblement rectiligne ou curviligne, notamment au moins sensiblement parallèle à ou au moins sensiblement orthogonal à, ou incliné par rapport à l'ouverture, à la bride et à la position du vantail à l'état fermé.

Selon d'autres possibilités, les moyens porteurs et les moyens de manoeuvre de déplacement de la porte comprennent des moyens de rotation ultérieure autour d'un axe au moins sensiblement parallèle ou au moins sensiblement orthogonal à l'ouverture, à la bride et à la position du vantail à l'état fermé.

Selon une réalisation, le vantail de la porte est prolongé latéralement en saillie, de façon au moins sensiblement coplanaire, par au moins une platine faisant partie des moyens porteurs et permettant le déplacement du vantail par suite de la mise en oeuvre des moyens de manoeuvre de déplacement.

Selon une réalisation, la paroi comporte une ou plusieurs lumières traversantes aptes au passage étanche et aseptique des moyens porteurs et/ou des moyens de manoeuvre de déplacement de la porte.

Selon une première variante de réalisation, les moyens porteurs et les moyens de manoeuvre de déplacement de la porte sont agencés pour être aptes à déplacer le vantail à partir de son état fermé selon un mouvement comprenant un mouvement initial de translation le long d'un axe au moins sensiblement orthogonal à l'ouverture, à la bride et à la position du vantail à l'état fermé, pour écarter le vantail de la bride, et au moins un mouvement ultérieur de translation le long d'un axe au moins sensiblement parallèle à l'ouverture, à la bride et à la position du vantail à l'état fermé et/ou un mouvement de rotation autour d'un axe au moins sensiblement orthogonal à l'ouverture, à la bride et à la position du vantail à l'état fermé, pour amener le vantail dans sa position à l'état ouvert ou ouvert primaire ou ouvert final où il est alors disposé dans une position latérale par rapport à l'ouverture, à la bride et à la position du vantail à l'état fermé, au moins sensiblement orthogonale à l'axe de l'espace d'entrée/sortie, l'espace d'écartement étant situé au-delà de la limite latérale de l'espace d'entrée/sortie.

Dans cette première variante, les moyens porteurs et les moyens de manoeuvre de déplacement de la porte peuvent comprendre au moins un premier vérin disposé selon un axe au moins sensiblement orthogonal à l'ouverture, à la bride et à la position du vantail à l'état fermé et assurant le mouvement initial de translation et soit au moins un second vérin selon un axe au moins sensiblement parallèle à l'ouverture, à la bride et à la position du vantail à l'état fermé, soit au moins un système de déplacement à rotation selon un axe au moins sensiblement orthogonal à l'ouverture, à la bride et à la position du vantail à l'état fermé.

Dans cette première variante, la course de mouvement initial de translation peut être celle juste nécessaire, aux jeux nécessaires près, de permettre le mouvement ultérieur de translation ou de rotation, sans que le vantail n'interfère avec la paroi de l'enceinte sur sa face intérieure.

Dans cette première variante, dans son état ouvert ou ouvert primaire ou ouvert final, la face extérieure du vantail peut être tournée vers et proche de la face intérieure de la paroi de l'enceinte.

Dans cette première variante, le vantail de la porte peut être prolongé latéralement en saillie, de façon au moins sensiblement coplanaire, par au moins une platine portée au moins sensiblement orthogonalement par le au moins un premier vérin traversant la au moins une lumière traversante de la paroi, le au moins un premier vérin étant porté par le au moins un second vérin ou le au moins un système de déplacement à rotation.

Selon une deuxième variante de réalisation, les moyens porteurs et les moyens de manoeuvre de déplacement de la porte sont agencés pour être aptes à déplacer le vantail à partir de son état fermé selon un mouvement comprenant au moins un mouvement de translation le long d'un axe au moins sensiblement orthogonal à l'ouverture, à la bride et à la position du vantail à l'état fermé, pour écarter le vantail de la bride puis amener le vantail dans sa position à l'état ouvert, ouvert primaire, ouvert final, où il est alors disposé dans une position au moins sensiblement en regard de l'ouverture, de la bride et de la position du vantail à l'état fermé, au moins sensiblement orthogonale à l'axe de l'espace d'entrée/sortie, l'espace d'écartement étant situé au-delà de la limite d'extrémité de l'espace d'entrée/sortie opposée à l'ouverture et à la bride.

Dans cette deuxième variante, les moyens porteurs et les moyens de manoeuvre de déplacement de la porte peuvent comprendre au moins un vérin disposé selon un axe au moins sensiblement orthogonal à l'ouverture, à la bride et à la position du vantail à l'état fermé.

Dans cette deuxième variante, la course de mouvement de translation peut être celle nécessaire à la réalisation de l'espace d'écartement.

Dans cette deuxième variante, dans son état ouvert ou ouvert primaire ou ouvert final, la face extérieure du vantail peut être tournée vers et éloignée de la l'ouverture et de la bride.

Dans cette deuxième variante, le vantail de la porte peut être prolongé latéralement en saillie, de façon au moins sensiblement coplanaire, par au moins une platine portée au moins sensiblement orthogonalement par le au moins un vérin.

Selon une troisième variante de réalisation, les moyens porteurs et les moyens de manoeuvre de déplacement de la porte sont agencés pour être aptes à déplacer le vantail à partir de son état fermé selon un mouvement comprenant un mouvement de rotation autour d'un axe au moins sensiblement parallèle à l'ouverture, à la bride et à la position du vantail à l'état fermé, pour amener le vantail dans sa position à l'état ouvert ou ouvert primaire ou ouvert final où il est alors disposé dans une position latérale par rapport à l'ouverture, à la bride et à la position du vantail à l'état fermé, au moins sensiblement orthogonale à l'axe de l'espace d'entrée/sortie, l'espace d'écartement étant situé au-delà de la limite latérale de l'espace d'entrée/sortie.

Dans cette troisième variante, les moyens porteurs et les moyens de manoeuvre de déplacement de la porte peuvent comprendre au moins un système de déplacement à rotation selon un axe au moins sensiblement parallèle à l'ouverture, à la bride et à la position du vantail à l'état fermé.

Dans cette troisième variante, la course de mouvement de rotation peut être voisine de d'un demi-tour.

Dans cette troisième variante, dans son état ouvert ou ouvert primaire ou ouvert final, la face extérieure du vantail peut être tournée vers l'opposé de la face intérieure de la paroi de l'enceinte.

Dans cette troisième variante, le vantail de la porte peut être prolongé latéralement en saillie, de façon au moins sensiblement coplanaire, par une platine portée par le système de déplacement à rotation.

Selon une quatrième variante de réalisation, les moyens porteurs et les moyens de manoeuvre de déplacement de la porte sont agencés pour être aptes à déplacer le vantail à partir de son état fermé selon un mouvement comprenant un mouvement de translation le long d'un axe curviligne correspondant au moins sensiblement à un arc de cercle d'axe au moins sensiblement parallèle à l'ouverture, à la bride et à la position du vantail à l'état fermé.

Dans cette quatrième variante, les moyens porteurs et les moyens de manoeuvre de déplacement de la porte comprennent au moins un système à parallélogramme déformable selon un axe au moins sensiblement parallèle à l'ouverture, à la bride et à la position du vantail à l'état fermé. La course de mouvement de rotation du parallélogramme déformable est par exemple de l'ordre d'un demi-tour.

Dans cette quatrième variante, dans son état ouvert ou ouvert primaire ou ouvert final, la face extérieure du vantail est tournée vers la face intérieure de la paroi de l'enceinte.

Selon une autre caractéristique, l'enceinte est spécialement destinée au domaine biopharmaceutique, et elle comporte ouverture ayant un diamètre supérieur à 40 centimètres.

Selon un deuxième aspect, l'invention a pour objet un dispositif de jonction étanche entre une première enceinte et une seconde enceinte isolées du milieu extérieur, tel que la première enceinte est une enceinte ainsi qu'il vient d'être décrit, la seconde enceinte comportant :
▪ une seconde structure incluant une seconde paroi fermée limitant un second espace intérieur,
▪ au moins une seconde ouverture ménagée dans la seconde paroi et limitée par une seconde bride annulaire dont la face extérieure est apte à être plaquée de façon hermétique sur la face extérieure de la première bride complémentaire appartenant à la première enceinte,
▪ des moyens de maintien amovible, associés au moins pour partie à la seconde bride, aptes à maintenir de façon amovible la seconde bride et la première bride plaquées l'une contre l'autre par leurs faces extérieures,
▪ une seconde porte dont le vantail est agencé et monté de façon apte à pouvoir être déplacé pour se trouver soit à l'état fermé où il coopère avec la seconde bride en fermant la seconde ouverture soit à l'état ouvert où il est dégagé de la seconde bride en ouvrant la seconde ouverture, et dont la face extérieure est apte être plaquée de façon hermétique sur la face extérieure du vantail de la première porte complémentaire appartenant à la première enceinte,
▪ des moyens de solidarisation amovible associés au moins pour partie à la seconde porte, aptes à maintenir de façon amovible le vantail de la seconde porte et le vantail de la première porte plaqués l'un contre l'autre par leurs faces extérieures,
▪ de telle sorte que lorsque les vantaux de la première porte et de la seconde porte sont à l'état ouvert, la première enceinte et la seconde enceinte communiquent entre elles par leurs ouvertures, un espace de communication incluant l'espace d'entrée/sortie étant ménagé entre les deux enceintes et permettant de faire passer un certain contenu de l'une à l'autre,
▪ une ligne critique annulaire intérieure de risque de contamination existant sur le vantail de la première porte et une ligne critique annulaire extérieure de risque de contamination existant sur la seconde bride, les moyens porteurs et les moyens de manoeuvre de déplacement de la première porte, structurellement intégrés à la première porte, sont tels que lorsque le vantail de la première porte et le vantail de la seconde porte sont à l'état ouvert, un espace d'écartement se présentant sous la forme d'un espace vide de taille appropriée soit formé et placé entre l'espace de communication et la ligne critique annulaire intérieure, le vantail de la première porte étant substantiellement écarté de l'espace d'entrée/sortie.

Selon une réalisation, le dispositif de jonction étanche entre une première enceinte et une seconde enceinte isolées du milieu extérieur comporte également des moyens structurellement intégrés à la seconde bride, aptes - lorsque les vantaux de la première porte et de la seconde porte sont à l'état ouvert - à former une séparation entre l'espace de communication et la ligne critique annulaire extérieure.

Selon une réalisation, le dispositif de jonction étanche entre une première enceinte et une seconde enceinte isolées du milieu extérieur est tel que les moyens structurellement intégrés à la première porte et/ou à la seconde bride sont en totalité intégrés à la première porte et/ou à la seconde bride.

Selon un troisième aspect, l'invention a pour objet un dispositif de transfert étanche entre une première enceinte telle qu'elle a été précédemment décrite et une seconde enceinte isolées du milieu extérieur, comportant un dispositif de jonction étanche entre les deux enceintes tel qu'il vient d'être indiqué.

On décrit maintenant plusieurs modes de réalisation de l'invention à l'aide des dessins, dans lesquels :

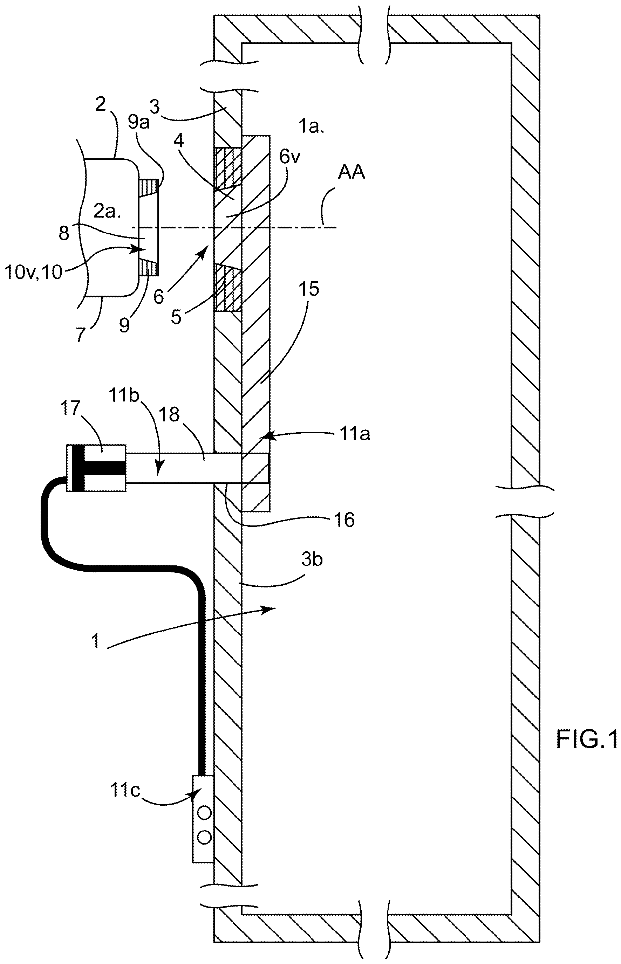

- La figure 1 est une vue en coupe en coupe par un plan axial, d'un dispositif de jonction étanche entre une première enceinte et une seconde enceinte représentées partiellement, alors que les deux enceintes sont à proximité l'une de l'autre mais non encore plaquées, les vantaux des deux portes des deux enceintes étant à l'état fermé, le dispositif de jonction étanche comportant des moyens structurellement intégrés à la première porte aptes à former un espace d'écartement entre l'espace d'entrée-sortie et le premier vantail, les moyens porteurs et les moyens de manoeuvre de déplacement de la première porte étant agencés pour être aptes à déplacer le premier vantail à partir de son état fermé selon un mouvement initial de translation le long d'un axe orthogonal à la première ouverture, à la première bride et au premier vantail lorsqu'il se trouve à l'état fermé et un mouvement ultérieur de rotation autour d'un axe orthogonal à la première ouverture, la première bride et au premier vantail lorsqu'il se trouve à l'état fermé.

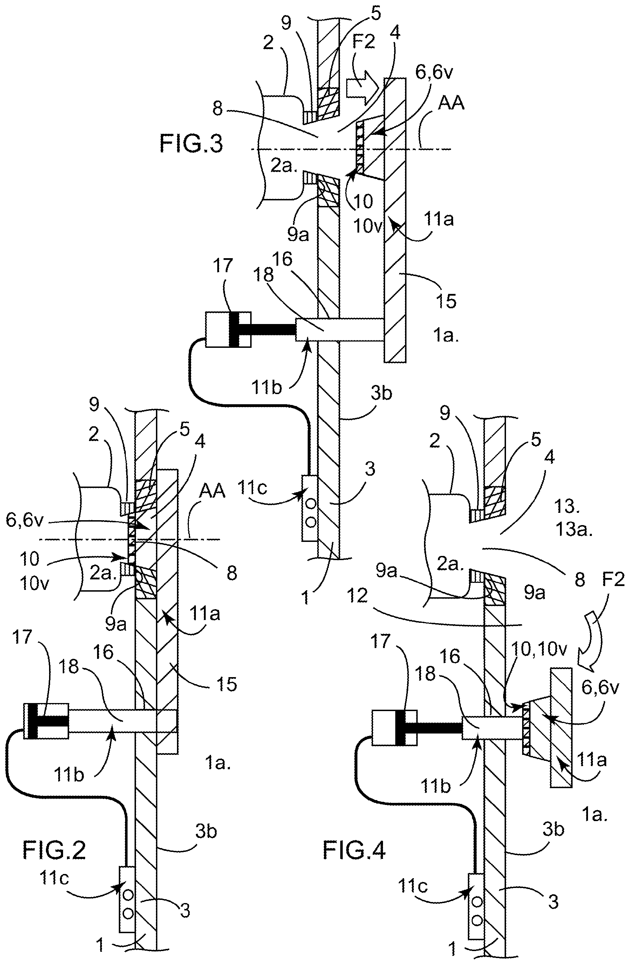

- La figure 2 est un schéma correspondant à la figure 1, alors que les deux brides et les vantaux des deux portes des deux enceintes sont appliqués l'un sur l'autre, les vantaux des portes des deux enceintes étant à l'état fermé.
- La figure 3 est un schéma analogue à la figure 2, alors que la seconde bride est assemblée à première bride et le vantail de la seconde porte assemblé au vantail de la première porte, une fois le mouvement initial de translation effectué mais avant que ne soit effectué le mouvement ultérieur de rotation, le vantail de la première porte et le vantail de la seconde porte étant écartés de la première bride, sans que le vantail de la première porte se trouve déjà à l'état complètement ouvert.
- La figure 4 est un schéma analogue aux figures 2 et 3, une fois le mouvement de rotation partiellement mais non complètement effectué, le vantail de la première porte ne se trouvant pas encore à l'état complètement ouvert.

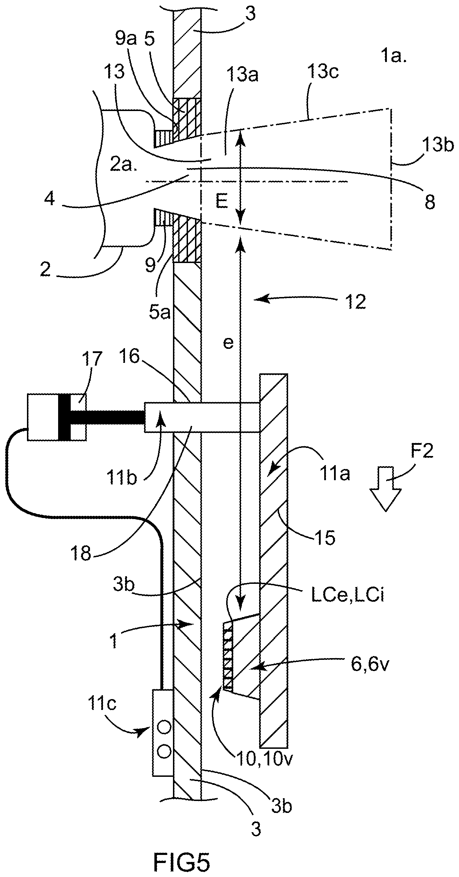

- La figure 5 est un schéma analogue aux figures 2 à 4, une fois le mouvement de rotation complètement effectué, le vantail de la première porte se trouvant à l'état ouvert, comme le vantail de la seconde porte, où il est disposé dans une position latérale par rapport à la première ouverture, à la première bride et au premier vantail lorsqu'il se trouve à l'état fermé, au moins sensiblement orthogonale à l'axe de l'espace d'entrée/sortie, l'espace d'écartement étant situé au-delà de la limite latérale de l'espace d'entrée/sortie.

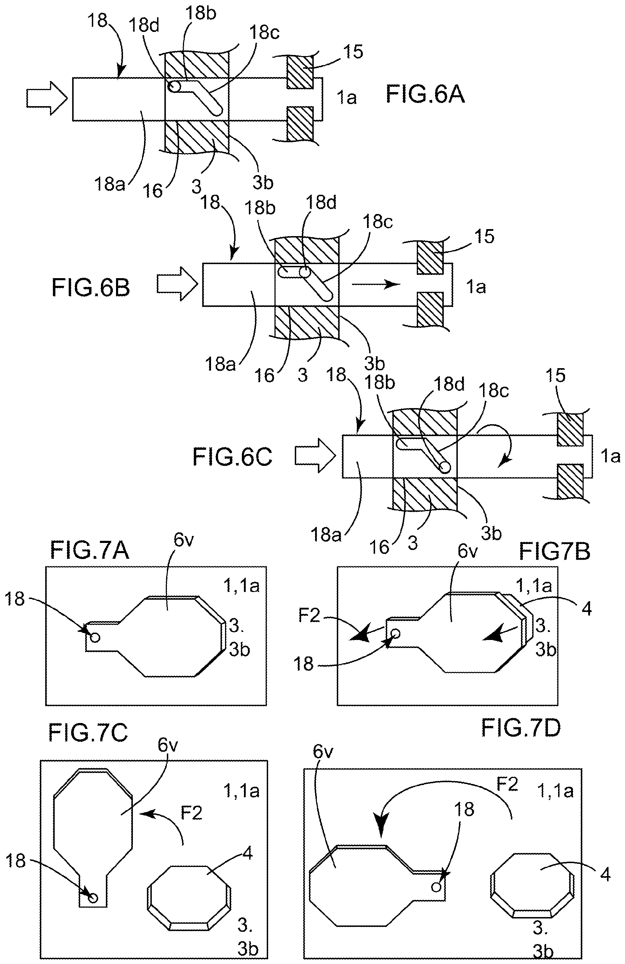

- Les figures 6A, 6B et 6C sont trois schémas en coupe illustrant des moyens porteurs et des moyens de manoeuvre de déplacement de la première porte aptes à déplacer le premier vantail selon un mouvement initial de translation et un mouvement ultérieur de rotation.
- Les figures 7A, 7B, 7C et 7D sont quatre schémas en élévation, depuis l'intérieur de la première enceinte, de la première ouverture et du vantail de la première porte, respectivement alors que le premier vantail est à l'état fermé (figures 1 et 2), est écarté de la première ouverture et de la première bride sans se trouver encore à l'état complètement ouvert (figure 3), a été partiellement pivoté (figure 4), a été totalement pivoté et est à l'état ouvert (figure 5).

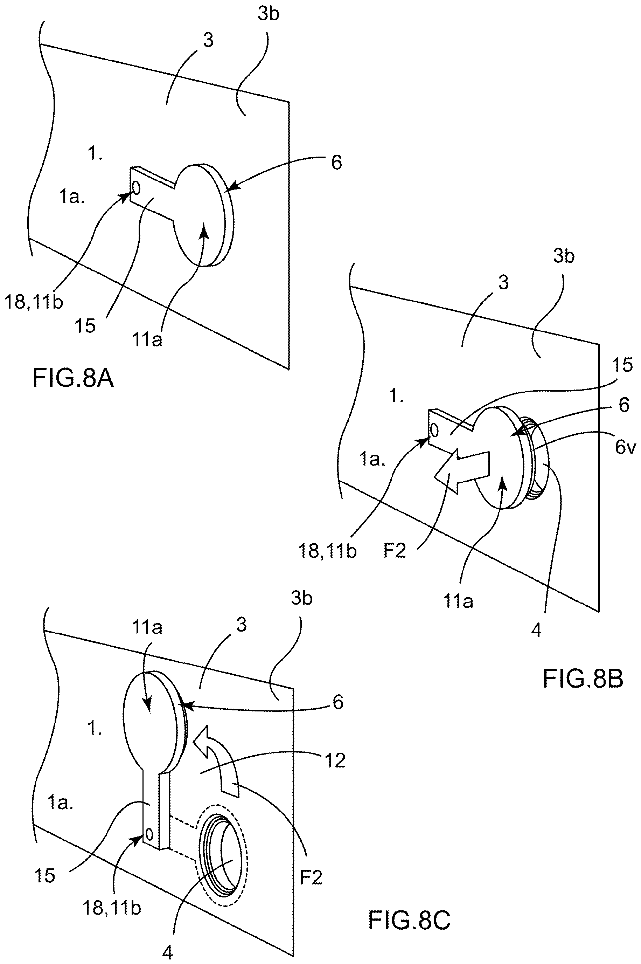

- Les figures 8A, 8B et 8C sont trois vues en perspective partielle, depuis l'intérieur de la première enceinte, correspondant aux figures 7A, 7B et 7C, dans le cas ou l'espace d'écartement est un espace vide.

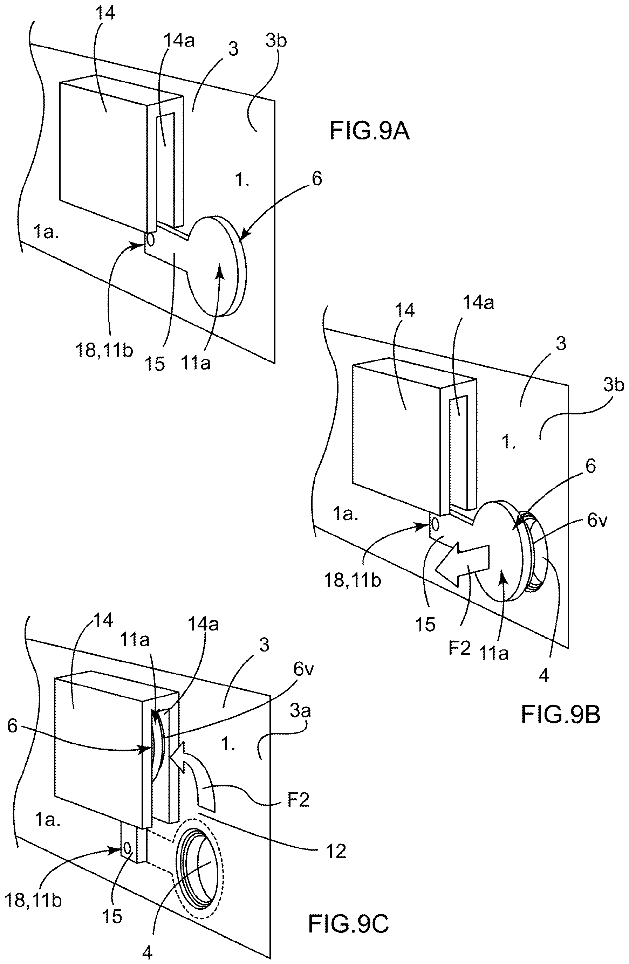

- Les figures 9A, 9B et 9C sont trois vues analogues aux figures 8A, 8B et 8C, dans le cas où l'enceinte comporte également une paroi de séparation fixe qui à l'état ouvert du premier vantail est placée et s'étend entre le premier vantail et l'espace d'entrée/sortie.

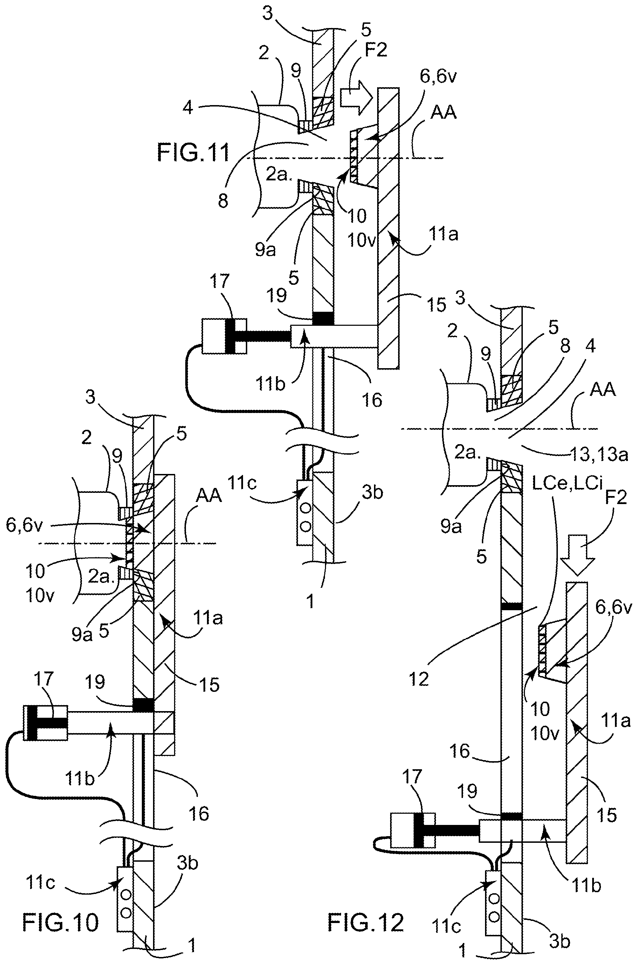

- La figure 10 est un schéma correspondant à la figure 2 d'un dispositif de jonction étanche entre une première enceinte et une seconde enceinte représentées partiellement, alors que les deux brides et les vantaux des deux portes des deux enceintes sont appliqués l'un sur l'autre, les vantaux des portes des deux enceintes étant à l'état fermé, le dispositif de jonction étanche comportant dans cette réalisation des moyens structurellement intégrés à la première porte aptes à former un espace d'écartement entre l'espace d'entrée-sortie et le premier vantail, les moyens porteurs et les moyens de manoeuvre de déplacement de la première porte étant agencés pour être aptes à déplacer le premier vantail à partir de son état fermé selon un mouvement initial de translation le long d'un axe au moins sensiblement orthogonal à la première ouverture, à la première bride et au premier vantail lorsqu'il se trouve à l'état fermé et un mouvement ultérieur de translation le long d'un axe parallèle à la première ouverture, à la première bride et au premier vantail lorsqu'il se trouve à l'état fermé.
- La figure 11 est un schéma analogue à la figure 10, alors que la seconde bride est assemblée à première bride et le vantail de la seconde porte assemblé au vantail de la première porte, une fois le mouvement initial de translation effectué mais avant que ne soit effectué le mouvement ultérieur de translation, le vantail de la première porte étant écarté de la première ouverture et de la première bride, sans se trouver encore à l'état complètement ouvert.
- La figure 12 est un schéma analogue aux figures 10 et 11, une fois le mouvement de translation complètement effectué, le vantail de la première porte se trouvant à l'état ouvert, comme le vantail de la seconde porte, où il est disposé dans une position latérale par rapport à la première ouverture, à la première bride et au premier vantail lorsqu'il se trouve à l'état fermé, au moins sensiblement orthogonale à l'axe de l'espace d'entrée/sortie, l'espace d'écartement étant situé au-delà de la limite latérale de l'espace d'entrée/sortie.

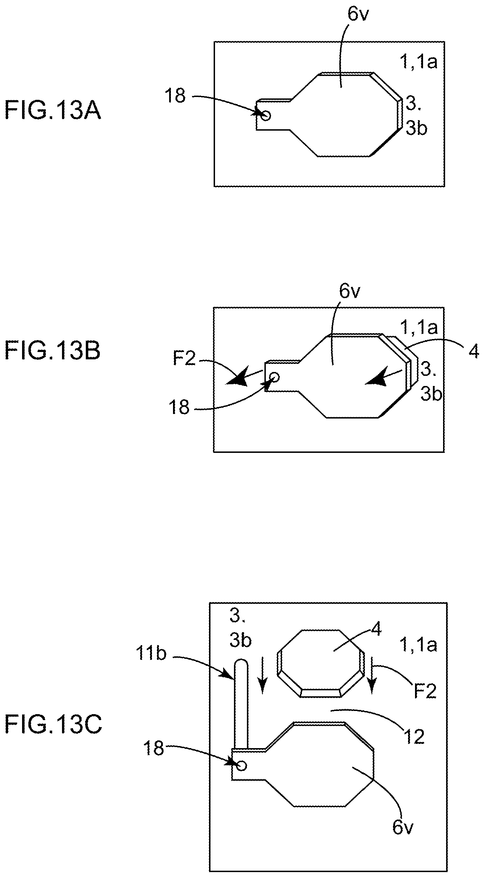

- Les figures 13A, 13B et 13C sont trois schémas en élévation depuis l'intérieur de la première enceinte de la première ouverture et du vantail de la première porte, respectivement alors que le premier vantail est à l'état fermé (figure 10), est écarté de la première bride sans se trouver encore à l'état complètement ouvert (figure 11), a été totalement coulissé et est à l'état ouvert (figure 12).

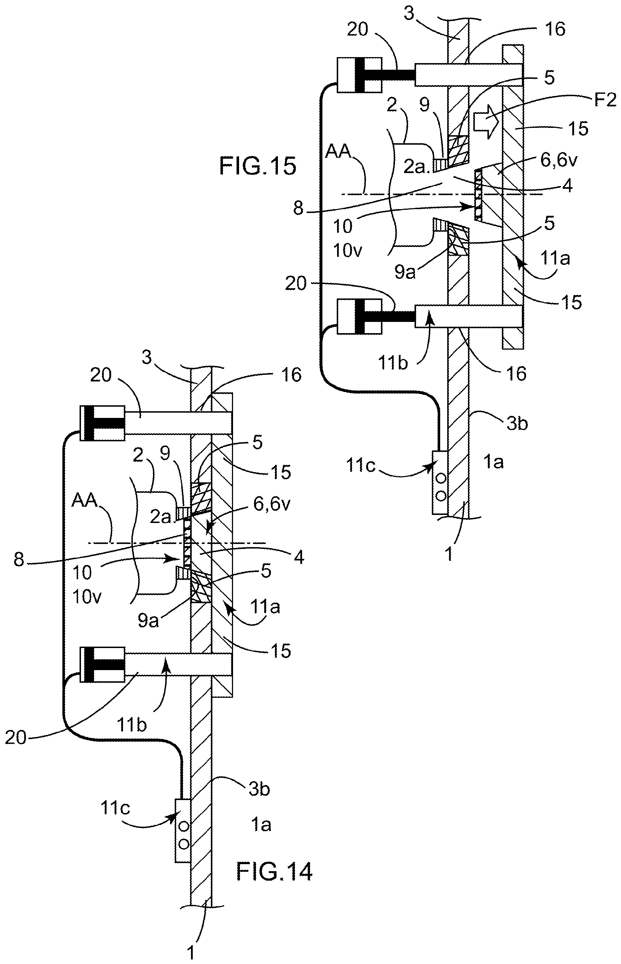

- La figure 14 est un schéma correspondant aux figures 2 et 10 d'un dispositif de jonction étanche entre une première enceinte et une seconde enceinte représentées partiellement, alors que les deux brides et les vantaux des deux portes des deux enceintes sont appliqués l'un sur l'autre, les vantaux des portes des deux enceintes étant à l'état fermé, le dispositif de jonction étanche comportant dans cette réalisation des moyens structurellement intégrés à la première porte aptes à former un espace d'écartement entre l'espace d'entrée-sortie et le premier vantail, les moyens porteurs et les moyens de manoeuvre de déplacement de la première porte étant agencés pour être aptes à déplacer le premier vantail à partir de son état fermé selon un mouvement de translation le long d'un axe orthogonal à la première ouverture, à la première bride et au premier vantail lorsqu'il se trouve à l'état fermé.
- La figure 15 est un schéma analogue à la figure 14, alors que la seconde bride est assemblée à première bride et le vantail de la seconde porte assemblé au vantail de la première porte, une fois le mouvement de translation partiellement mais non complètement effectué, le vantail de la première porte ne se trouvant pas encore à l'état complètement ouvert.

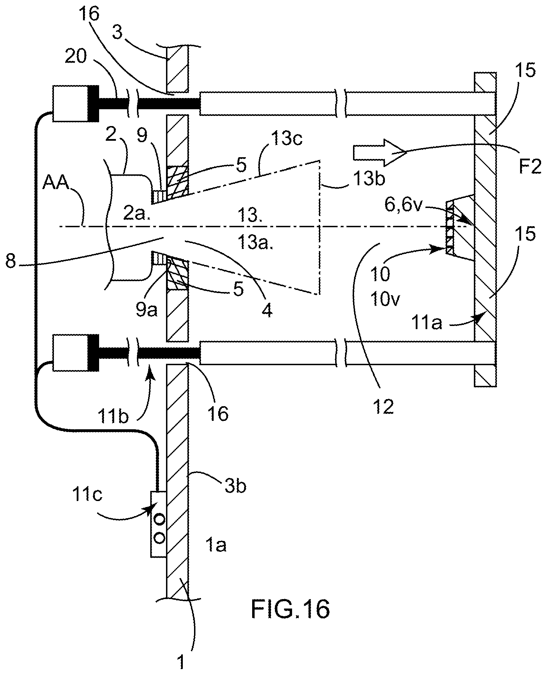

- La figure 16 est un schéma analogue aux figures 14 et 15, une fois le mouvement de translation complètement effectué, le vantail de la première porte se trouvant à l'état ouvert, comme le vantail de la seconde porte, où il est disposé dans une position au moins sensiblement en regard de la première ouverture, de la première bride et de la position du premier vantail à l'état fermé, au moins sensiblement orthogonale à l'axe de l'espace d'entrée/sortie, l'espace d'écartement étant situé au-delà de la limite d'extrémité de l'espace d'entrée/sortie opposée à la première ouverture et à la première bride.

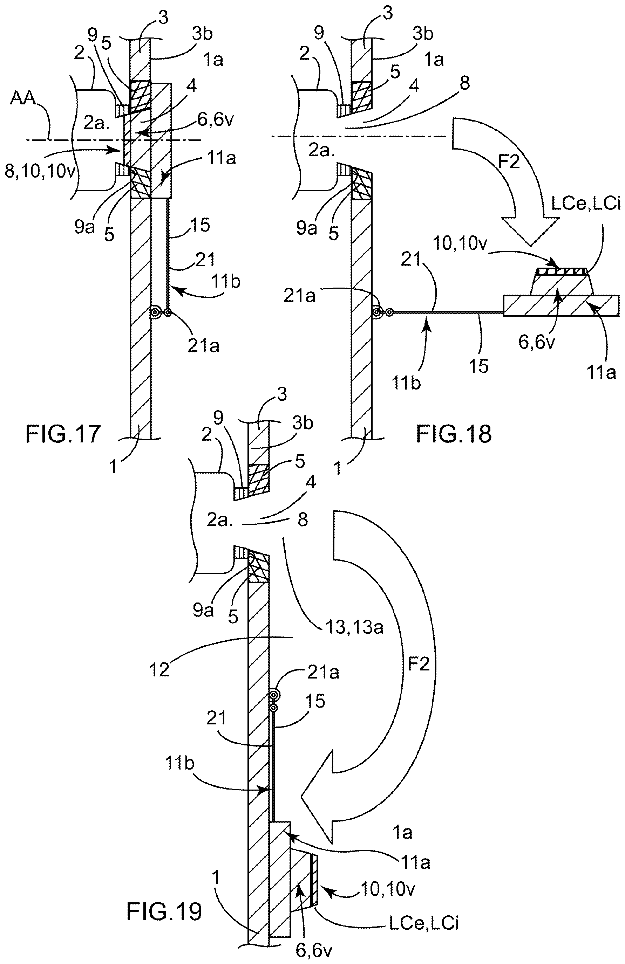

- La figure 17 est un schéma correspondant aux figures 2, 10 et 14 d'un dispositif de jonction étanche entre une première enceinte et une seconde enceinte représentées partiellement, alors que les deux brides et les vantaux des deux portes des deux enceintes sont appliqués l'un sur l'autre, les vantaux des portes des deux enceintes étant à l'état fermé, le dispositif de jonction étanche comportant dans cette réalisation des moyens structurellement intégrés à la première porte aptes à former un espace d'écartement entre l'espace d'entrée-sortie et le premier vantail, les moyens porteurs et les moyens de manoeuvre de déplacement de la première porte étant agencés pour être aptes à déplacer le premier vantail, portant le second vantail, à partir de son état fermé selon un mouvement de rotation autour d'un axe parallèle à la première ouverture, à la première bride et au premier vantail lorsqu'il se trouve à l'état fermé.
- La figure 18 est un schéma analogue à la figure 17, alors que la seconde bride est assemblée à première bride et le vantail de la seconde porte assemblé au vantail de la première porte une fois le mouvement de rotation partiellement mais non complètement effectué, le vantail de la première porte ne se trouvant pas encore à l'état complètement ouvert.
- La figure 19 est un schéma analogue aux figures 17 et 18, une fois le mouvement de rotation complètement effectué, le vantail de la première porte se trouvant à l'état ouvert, comme le vantail de la seconde porte, où il est disposé dans une position latérale par rapport à la première ouverture, à la première bride et au premier vantail lorsqu'il se trouve à l'état fermé, au moins sensiblement orthogonale à l'axe de l'espace d'entrée/sortie, l'espace d'écartement étant situé au-delà de la limite latérale de l'espace d'entrée/sortie.

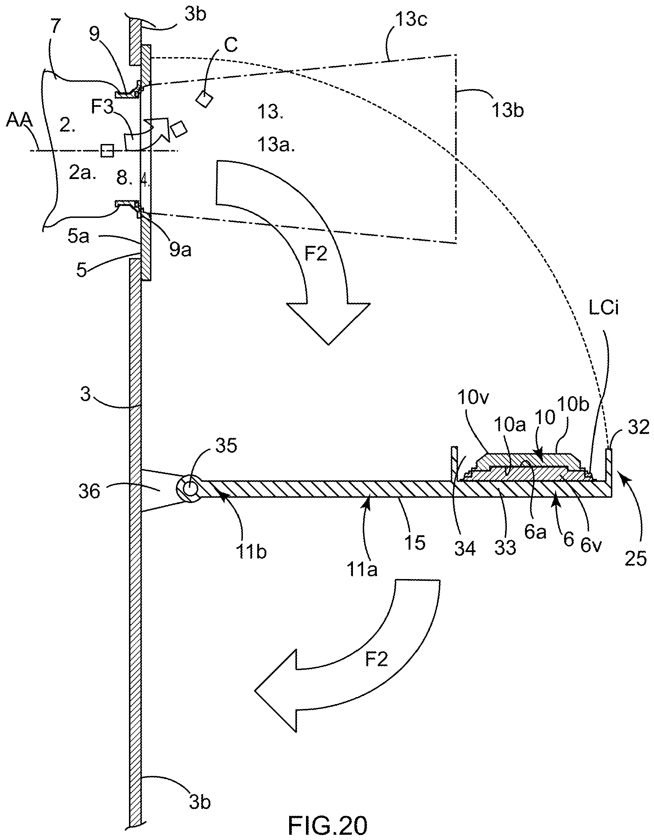

- La figure 20 est une vue en coupe axiale du vantail de la première porte dans une variante comprenant en outre une paroi de séparation sous la forme d'un déflecteur annulaire intégré à la première porte.

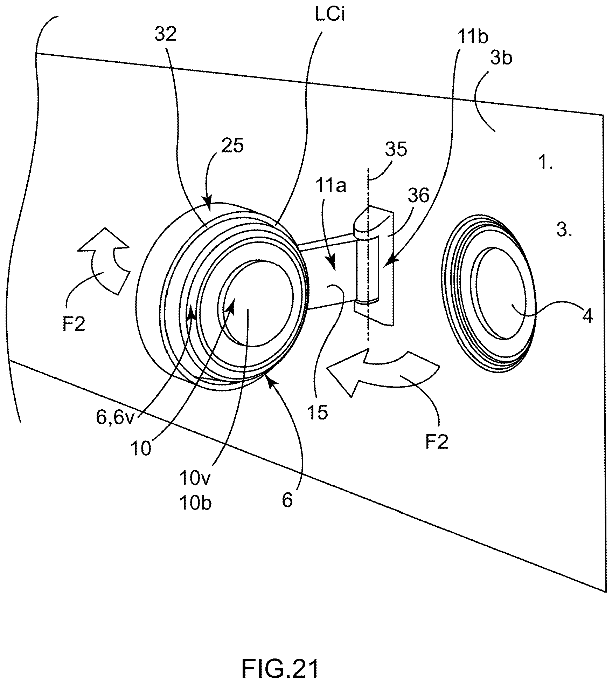

- La figure 21 est une vue en perspective correspondant à la figure 20, depuis l'intérieur de la première enceinte.

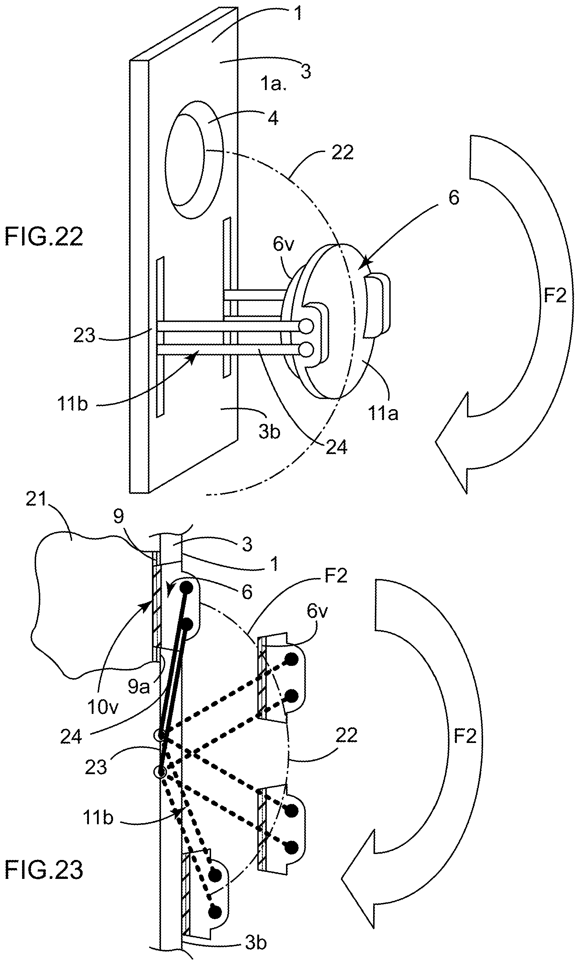

- La figure 22 est un schéma en perspective d'un dispositif de jonction étanche selon une quatrième variante de réalisation où les moyens porteurs et les moyens de manoeuvre de déplacement de la première porte sont agencés pour être aptes à déplacer le premier vantail, portant le second vantail, à partir de son état fermé selon un mouvement de translation le long d'un axe curviligne correspondant au moins sensiblement à un arc de cercle d'axe au moins sensiblement parallèle à l'ouverture, à la bride et à la position du vantail à l'état fermé, les moyens porteurs et les moyens de manoeuvre de déplacement de la porte comprenant au moins un système à parallélogramme déformable.
- La figure 23 est un schéma en coupe du dispositif selon la quatrième variante de la figure 22, lorsqu'il se trouve à l'état fermé, dans deux états ouvert intermédiaires et à l'état ouvert.

Un dispositif de transfert étanche et aseptique entre une enceinte 1 (première enceinte 1) et une autre enceinte 2 (seconde enceinte 2) tel que celui ici considéré est dit « à double porte ». À titre exemplatif, mais non limitatif, un tel dispositif est du type général de celui connu sous la maque BIOSAFE® et décrit dans le document EP-A-0688020.

Un tel transfert peut être nécessaires dans nombre de domaines techniques, notamment mais non exclusivement le domaine biopharmaceutique.

L'enceinte 1 (première enceinte) - par exemple fixe, rigide et de relativement grande taille - comprend une structure incluant une première paroi 3 fermée, pleine et rigide, mais pourvue d'une première ouverture 4, elle-même limitée par une première bride annulaire 5, de face extérieure 5a, l'une et l'autre de l'ouverture 4 et de la bride 5 étant par exemple circulaires, cette réalisation n'étant pas limitative. Selon une réalisation, la première paroi est verticale ou inclinée sur la verticale d'un angle de l'ordre de 30° à 45°. La paroi 3, ayant une face intérieure 3b, limite l'espace intérieur 1a de l'enceinte 1.

Est qualifié d' «intérieur » en liaison avec la première enceinte 1, ce qui est dans ou vers l'espace intérieur 1a limité par la paroi 3. Est qualifié d' «extérieur » en liaison avec la première enceinte 1, ce qui est hors de son espace intérieur 1a limité par la paroi 3.

La première enceinte 1 comprend également une première porte 6 supportée par la structure, notamment par la paroi 3, par l'intermédiaire de moyens porteurs 11a, mobiles ou déformables. Le vantail 6v de la première porte 6 (ou premier vantail 6v) est monté à déplacement par rapport à la première bride 5 formant siège, et agencé pour être déplacé et amené soit à l'état fermé où il coopère avec la bride 5 en fermant l'ouverture 4 soit à l'état ouvert où il est dégagé de la bride 5 et placé dans l'espace intérieur 1a en ouvrant l'ouverture 4. Par synecdoque, on dira que la première porte 6 est montée à déplacement par rapport à la première bride 5 pour se trouver à l'état fermé ou à l'état ouvert où, respectivement, elle ferme ou ouvre la première ouverture 4. Le vantail 6v comporte une face extérieure 6a.

Le cas échéant, la première enceinte 1 comprend plusieurs premières portes telles que la première porte 6, le dispositif de transfert faisant partie d'une ligne opératoire propre à permettre de réaliser une ou plusieurs opérations avant et/ou après le transfert, telles que fabrication, traitement, manipulation, utilisation, mesure, contrôle, analyse, ou autre...

La seconde enceinte 2 - par exemple une poche déplaçable, à usage unique, flexible au moins partiellement et d'une plus petite taille - comprend une structure incluant une seconde paroi 7 fermée, pleine et souple, mais pourvue d'une seconde ouverture 8, elle-même limitée par une seconde bride annulaire 9, de face extérieure 9b, l'une et l'autre de l'ouverture 8 et de la bride 9 étant par exemple circulaires, cette réalisation n'étant pas limitative. La paroi 7 limite l'espace intérieur 2a de l'enceinte 2.

Est qualifié d'«intérieur » en liaison avec la seconde enceinte 2, ce qui est dans ou vers son espace intérieur 2a limité par la paroi 7. Est qualifié d'«extérieur » en liaison avec la seconde enceinte 2, ce qui est hors de son espace intérieur 2a limité par la paroi 7.

La seconde enceinte 2 comprend également une seconde porte 10, ayant un second vantail 10v, de face extérieure 10a et de face intérieure 10b. Le vantail 10v, monté à déplacement par rapport à la seconde bride 9 formant siège, et agencé pour se trouver à l'état fermé ou à l'état ouvert où, respectivement, il ferme ou ouvre la seconde ouverture 8. Comme précédemment, par synecdoque, on dira que la seconde porte 10 est montée à déplacement par rapport à la seconde bride 9 pour se trouver à l'état fermé ou à l'état ouvert où, respectivement, elle ferme ou ouvre la seconde ouverture 8.

Le dispositif de transfert étanche et aseptique est tel qu'à une même première enceinte 1 peuvent être associées lorsque nécessaire plusieurs secondes enceintes telles que la seconde enceinte 2, successivement si la première enceinte 1 comprend une seule ouverture et une seule porte 4 et 6 et/ou simultanément si la première enceinte 1 comprend plusieurs ouvertures et portes 4 et 6.

L'une des enceintes 1, 2, contient originellement un certain contenu C. Par exemple, le certain contenu C se trouve originellement dans la première enceinte 1 ou dans la seconde enceinte 2, le transfert ayant pour but de l'amener finalement, respectivement, dans la seconde enceinte 2 ou dans la première enceinte 1, et ce en faisant passer le certain contenu dans un espace de communication 13 ménagé entre les deux enceintes 1 et 2.

Le certain contenu C a pour caractéristique d'avoir vocation à, et donc de pouvoir, être transféré via l'espace de communication 13. Dans le domaine biopharmaceutique, le certain contenu peut être par exemple d'un objet stérile tel qu'un récipient, un élément de récipient tel qu'un bouchon, une seringue, mais aussi des éléments de contrôle d'environnement, voire même des déchets produits lors d'opération de fabrication ou de traitement, déchets qu'il s'agit de transférer afin de les éliminer...

Des transferts, tels que ceux ici considérés, interviennent dans le cadre de processus plus complexes dans lesquels le certain contenu C subit une ou plusieurs opérations avant et/ou après le transfert. Ces opérations consistent en fabrication, traitement, manipulation, utilisation, mesure, contrôle, analyse, ou autre, l'exigence d'asepsie devant être remplie.

D'autre part, il importe que le transfert du certain contenu C via l'espace de communication 13 ne soit pas entravé par le vantail 6v de la première porte 6 à l'état ouvert, que le certain contenu C ne détériore pas ce premier vantail 6v et inversement que ce premier vantail 6v ne détériore pas le certain contenu C, donc que le premier vantail 6v ne puisse être atteint par le certain contenu C lors de son transfert.

L'invention a pour objet tant la première enceinte 1 que le dispositif de jonction étanche et le dispositif de transfert qui l'inclut.

La première bride 5, la première porte 6 (plus précisément le vantail 6v), la seconde bride 9 et la seconde porte 10 (plus précisément le vantail 10v) ont, chacune, une face intérieure située vers l'intérieur, respectivement, de la première enceinte 1, de la seconde enceinte 2, et une face extérieure 5a, 6a, 9a, 10a au contact du milieu extérieur aux deux enceintes.

La première bride 5 et la seconde bride 9 sont complémentaires l'une de l'autre tant structurellement que fonctionnellement. Elles sont conçues afin d'être aptes à être maintenues de façon amovible plaquées l'une contre l'autre par leurs faces extérieures 5a et 9a, de façon hermétique, en étant ainsi isolées du milieu extérieur.

À cet effet, il est prévu de pourvoir les brides 5 et 9 de moyens d'assemblage tels que par exemple les formes complémentaires données à leurs faces respectives 5a et 9a devant être plaquées l'une contre l'autre et un ou des joints d'étanchéité sur la seconde bride 9.

D'autre part, il est prévu d'associer aux brides 5 et 9 un mécanisme de solidarisation amovible, par exemple à cames, non représenté.

La première porte 6 et la seconde porte 10 - plus précisément leurs vantaux 6v et 10v - sont complémentaires l'une de l'autre tant structurellement que fonctionnellement. Elles sont conçues afin d'être aptes à être plaquées l'une contre l'autre par les faces extérieures 6a et 10a de leur vantail respectif 6v et 10v, de façon hermétique, en étant ainsi isolées du milieu extérieur.

À cet effet, il est prévu de pourvoir les portes 6 et 10 - plus précisément leurs vantaux 6v et 10v - de moyens d'assemblage tels que par exemple les formes complémentaires données à leurs faces extérieures respectives 6a et 10a devant être plaquées l'une contre l'autre et un ou des joints d'étanchéité.

Il est également prévu des moyens de manoeuvre de déplacement 11b aptes à déplacer la première porte 6 - plus précisément son vantail 6v - entre ses états fermé et ouvert.

Il est également prévu des moyens de commande 11c des moyens de manoeuvre de déplacement 11b.

Les moyens porteurs 11a, mobiles ou déformables, les moyens de manoeuvre de déplacement 11b et les moyens de commande 11c sont intégrés les uns aux autres et intégrés à la première porte 6.

Il est également prévu des moyens de solidarisation amovible associés aux deux portes 6 et 10, non représentés, aptes à maintenir de façon amovible les deux portes 6 et 10 - plus précisément leurs vantaux 6v et 10v - plaquées l'une contre l'autre.

Il est entendu que la première porte 6 - plus précisément le premier vantail 6v - peut passer par et se trouver dans un état intermédiaire ouvert, mais pas totalement ouvert (figures 3, 4, 8B, 9B, 11, 15, 18, 20, 21).

Lorsque le premier vantail 6v est à l'état fermé, il coopère avec la première ouverture 4, de sorte que la première ouverture 4, la première bride 5 et le premier vantail 6v à l'état fermé sont sensiblement coplanaires aux épaisseurs près, le premier vantail étant escamoté, au sens où il ne saille pas substantiellement de la première paroi 3.

Lorsque les deux portes 6 et 10, respectivement les deux vantaux 6v et 10v, sont à l'état ouvert, il est ménagé entre les enceintes 1 et 2 un espace de communication 13 ayant une forme générale correspondant à celle d'un tronc de cylindre d'axe AA passant par le bord des ouvertures 4 et 8 ou une forme voisine de celle d'un tel tronc de cylindre, par exemple une forme de double tronc de cône ou de double tronc de pyramide ayant une petite base médiane correspondant au bord des ouvertures 4 et 8 et deux grandes bases de part et d'autre, respectivement dans les enceintes 1 et 2, notamment dans l'espace intérieur 1a à l'écart de la première ouverture 4.

L'espace de communication 13 comprend un espace d'entrée/sortie 13a dans/de l'espace intérieur 1a de la première enceinte 1.

Cet espace d'entrée/sortie 13a a une forme générale de tronc de cylindre, de cône ou de pyramide, s'étendant dans l'espace intérieur 1a au moins sensiblement axialement d'axe AA, à partir de l'ouverture 4 et de la bride 5.

Cet espace d'entrée/sortie 13a, représenté schématiquement, est virtuellement limité par une limite d'extrémité proximale formée par la première ouverture 4 et la première bride 5, par une limite d'extrémité distale 13b opposée à la première ouverture 4 et à la première bride 5, et par une limite latérale 13c entre les limites d'extrémité proximale et distale 13b.

Le dispositif de jonction étanche présente en fonctionnement ce que l'homme de l'art connaît sous le terme de ligne critique.

Une ligne critique intérieure LCi se trouve sur la face extérieure 6a du vantail 6v de la première porte 6 en contact avec le milieu extérieur et non recouverte par face extérieure 10a du vantail 10v de la seconde porte 10, lorsque les vantaux 6v et 10v des deux portes 6 et 10 sont appliqués l'un contre l'autre.

Une ligne critique extérieure LCe se trouve sur la face extérieure 9a de la seconde bride 9 en contact avec le milieu extérieur et non recouverte par la face extérieure 5a première bride 5, lorsque les brides 5 et 9 sont appliquées l'une contre l'autre.

Ces lignes critiques LCi et LCe constituent des zones où il existe un risque de contamination du fait qu'elles sont en contact avec le milieu extérieur.

Ces lignes critiques LCi et LCe sont donc inévitables car il est impossible que le vantail 10v de la seconde porte 10 recouvre intégralement le vantail 6v de la première porte 6 et que la face extérieure 5a de la première bride 5 recouvre intégralement la face extérieure 9a de la seconde bride 9, même si la forme et le dimensionnement des brides 5 et 9 et des vantaux 6v et 10v des portes 6 et 10, respectivement, sont choisis pour que ces lignes critiques LCi et LCe soient minimales.

La première enceinte 1 est telle que les moyens porteurs 11a et les moyens de manoeuvre de déplacement 11b de la première porte 6 sont agencés de manière qu'à l'état ouvert du premier vantail 6v, le premier vantail 6v soit substantiellement espacé au-delà de la limite 13b, 13c de l'espace d'entrée/sortie 13a, un espace d'écartement 12 étant ainsi ménagé entre la limite 13b, 13c de l'espace d'entrée/sortie 13a et le premier vantail 6v à l'état ouvert.

Selon les réalisations envisageables, l'espace d'écartement 12 est situé au-delà de la limite latérale 13c de l'espace d'entrée/sortie 13a (figures 5, 8C, 9C, 12, 13C, 19, 22, 23) ou est situé au-delà de sa limite d'extrémité distale 13 b (figure16).

On entend par « substantiellement espacé », le fait que le premier vantail 6v est éloigné et espacé à hors de la limite 13b, 13c de l'espace d'entrée/sortie 13a, et qu'entre toute zone du premier vantail 6v et la limite 13b, 13c la plus proche de l'espace d'entrée/sortie 13a, il existe un intervalle constitutif d'une distance e qui, à l'échelle de la taille E de l'espace d'entrée/sortie 13a comptée selon la direction de cet intervalle où est comptée cette distance e, non seulement n'est pas négligeable mais même est notable et appréciable.

Lorsque l'espace d'écartement 12 est situé au-delà de la limite latérale 13c de l'espace d'entrée/sortie 13a, la direction dans laquelle sont comptées e et E est une direction orthogonale à l'axe AA. Lorsque l'espace d'écartement 12 est situé au-delà de la limite d'extrémité distale 13 b de l'espace d'entrée/sortie 13a, la direction dans laquelle sont comptées e et E est la direction axiale AA.

Dans les applications plus spécialement envisagées où la première ouverture 4 a un diamètre de l'ordre de 10 à 40 centimètres, E peut être du même ordre de grandeur (10 à 40 centimètres) et l'écartement e constitutif de l'espace d'écartement 12 peut être compris entre une valeur minimale de l'ordre de 3 et pouvant aller jusqu'à 40 centimètres. Comme indiqué, l'invention vise également le cas d'une première enceinte 1 spécialement destinée au domaine biopharmaceutique dont l'ouverture 4 (et donc le vantail 6v) a un diamètre supérieur aux diamètres actuels, disons un diamètre supérieur à 40 centimètres.

Bien que l'écartement e ne soit pas directement dicté la taille E, il s'avère que l'écartement e peut être au moins égal au quart de E, ou même au moins égal à la moitié de E, ou même au moins égal à E.

Le mot « diamètre » doit être compris comme la plus grande largeur de la première ouverture 4, celle-ci n'étant pas obligatoirement circulaire.

On entend par « état ouvert du premier vantail 6v », l'état dans lequel est ménagé l'espace d'écartement 12 tel qu'il vient d'être défini ou un état ouvert primaire où est ménagé un espace d'écartement 12 primaire tel qu'il vient d'être défini, le premier vantail 6v pouvant également se trouver dans un état ouvert final dans lequel est ménagé entre lui et l'espace d'entrée/sortie 13a un intervalle constitutif d'une distance plus grande que celle de l'état ouvert primaire.

Avec la structure décrite, les moyens porteurs 11a et les moyens de manoeuvre de déplacement 11b, structurellement intégrés à la première porte 6, constituent des moyens de protection contre les risques de contamination pour la ligne critique intérieure (LCi). De tels moyens de protection sont constitués par l'espace d'écartement 12 formé comme il a été exposé et placé entre l'espace d'entrée/sortie 13a et la ligne critique intérieure (LCi). Cet espace d'écartement 12 a une taille appropriée, comme il a été exposé, pour que le premier vantail 6v soit normalement non atteignable par le certain contenu C lors de son passage dans l'espace d'entrée/sortie 13a. C'est ainsi que l'espace d'écartement 12 constitue des moyens de protection de la ligne critique intérieure (LCi).

Le dispositif de jonction étanche comporte par conséquent des moyens 11a, 11b structurellement intégrés - notamment totalement intégrés - à la première porte 6, aptes - lorsque la première porte 6 et la seconde porte 10 sont à l'état ouvert - à former une séparation - à savoir l'espace d'écartement 12 - entre l'espace de communication 13 et la ligne critique annulaire intérieure LCi.

Selon une réalisation possible non représentée, le dispositif de jonction étanche comporte également des moyens structurellement intégrés - notamment totalement intégrés - à la seconde bride 9 qui sont aptes - lorsque la première porte 6 et la seconde porte 10, plus précisément leurs vantaux 6v et 10v,, sont à l'état ouvert - à former une séparation entre l'espace de communication 13 et la ligne critique annulaire extérieure LCe.

De tels moyens structurellement intégrés à la seconde bride 9 se présentent par exemple sous la forme d'un déflecteur annulaire intégré à la seconde bride 9, limitant la seconde ouverture 8 et saillant du plan frontal libre de la seconde bride 9 formant interface avec la première bride 5.

Le dispositif de transfert étanche qui incorpore le dispositif de jonction étanche comporte donc, lui aussi, les moyens aptes - lorsque la première porte 6 et la seconde porte 10, plus précisément leurs vantaux 6v et 10v, sont à l'état ouvert - à former une séparation entre l'espace de communication 13 et la ligne critique annulaire intérieure LCi et, le cas échéant, la ligne critique annulaire extérieure LCe.

On entend par intégrés - relativement aux moyens 11a et 11b et à la première porte 6, le fait que ces moyens 11a et 11b sont, respectivement, incorporés à ou encore inclus dans la première porte 6, de manière à former un tout cohérent avec elle. En d'autres termes, les moyens 11a et 11b ne sont pas, respectivement, étrangers à, rapportés sur, ou extérieurs à la porte 6.

Exprimer que la ligne critique intérieure LCi, le cas échéant la ligne critique extérieure LCe, est normalement non atteignable lors du passage du certain contenu C dans l'espace d'entrée/sortie 13a, plus généralement l'espace de communication 13, cela signifie que lorsque l'on fait passer le certain contenu C de l'une à l'autre enceinte 1, 2, dans des conditions normales d'utilisation du dispositif de transfert étanche, le certain contenu C ne vient pas au contact avec la ligne critique LCi, LCe. On entend par conditions normales d'utilisation du dispositif de transfert étanche, le fait que le certain contenu C est transféré selon le cheminement adapté à la forme de l'espace de communication 13, par exemple dans la partie médiane de cet espace.

Selon les réalisations envisageables, l'espace d'écartement 12 est un espace vide (figures 5, 8C, 12, 16, 19, 22 et 23) ou bien l'enceinte 1 comporte également une paroi de séparation 14, 25 fixe ou mobile qui, à l'état ouvert du premier vantail 6v, est placée et s'étend, au moins pour partie, entre le premier vantail 6v et l'espace d'entrée/sortie 13a (figure 9C).

Selon les réalisations envisageables, une telle paroi de séparation 14 est fixe (figures 9A, 9B et 9C) ou une telle paroi de séparation 25 est mobile (figures 20 et 21).

Selon une réalisation envisageable (figures 9A, 9B et 9C), une telle paroi de séparation 14 peut être associée structurellement à la structure de la première enceinte 1, notamment à la première paroi 3, auquel cas la paroi de séparation peut être fixe et former avec la paroi 3 une cavité de protection 14a de la ligne critique intérieure LCi.

Selon une autre réalisation envisageable (figures 20 et 21), une telle paroi de séparation 25 peut être associée structurellement à la première porte 6 et/ou à ses moyens porteurs 11a ou de manoeuvre de déplacement 11b, auquel cas la paroi de séparation 25 est mobile. Par exemple, il peut être prévu un déflecteur annulaire 25 intégré à la première porte 6, porté par ou faisant partie des moyens porteurs 11a ou du premier vantail 6v. Un tel déflecteur annulaire 25 cylindrique forme avec une partie centrale 33 des moyens porteurs 11a, une cavité de protection 34 de la ligne critique intérieure LCi, de dimension axiale supérieure, notamment nettement supérieur, à l'encombrement axial du premier vantail 6v ou à l'encombrement axial de l'ensemble comprenant le premier vantail 6v et le second vantail 10v plaqué sur le premier vantail 6v.

Selon les réalisations représentées, le premier vantail 6v à l'état ouvert est disposé dans une position au moins sensiblement parallèle à la première ouverture 4, à la première bride 5 et au premier vantail 6v lorsqu'il se trouve à l'état fermé. Dans ce cas, le premier vantail 6v est disposé dans une position au moins sensiblement orthogonale à l'axe AA de l'espace d'entrée/sortie 13a.

Selon une autre réalisation non représentée, le premier vantail 6v à l'état ouvert est disposé dans une position au moins sensiblement orthogonale à la première ouverture 4, à la première bride 5 et au premier vantail 6v lorsqu'il se trouve à l'état fermé. Dans ce cas, le premier vantail 6v est disposé dans une position au moins sensiblement parallèle à l'axe AA de l'espace d'entrée/sortie 13a.

Selon la réalisation représentée sur la figure 16, le premier vantail 6v à l'état ouvert est disposé dans une position au moins sensiblement en regard de la première ouverture 4, de la première bride 5 et de la position du premier vantail 6v à l'état fermé. Cette réalisation correspond au cas où l'espace d'écartement 12 est situé au-delà de la limite d'extrémité distale 13 b de l'espace d'entrée/sortie 13a.

Selon les réalisations représentées sur les figures 5, 8C, 9C, 12, 19, 22 et 23, le premier vantail 6v à l'état ouvert est disposé dans une position latérale par rapport à la première ouverture 4, à la première bride 5 et au premier vantail 6v lorsqu'il se trouve à l'état fermé. Cette réalisation correspond au cas où l'espace d'écartement 12 est situé au-delà de la limite latérale 13c de l'espace d'entrée/sortie 13a.

Il est entendu que lorsque la première enceinte 1 est associée à une seconde enceinte 2, dans le cadre d'un dispositif de jonction étanche et d'un dispositif de transfert aseptique, le premier vantail 6v supporte le second vantail 10v, les deux vantaux 6v et 10v étant solidarisés plaqués l'un contre l'autre par leurs faces extérieures respectives 6a et 10a en contact.

Les moyens porteurs 11a et les moyens de manoeuvre de déplacement 11b de la première porte 6, de même que l'agencement et la cinématique de la première porte 6, notamment de son vantail 6a peuvent faire l'objet de plusieurs réalisations différentes structurellement mais toutes ayant pour effet de faire en sorte qu'à l'état ouvert du premier vantail 6, celui-ci soit substantiellement espacé au-delà de la limite 13b de l'espace d'entrée/sortie 13, avec constitution de l'espace d'écartement 12.

De façon générale, les moyens porteurs 11a et les moyens de manoeuvre de déplacement 11b sont agencés pour être aptes à déplacer le premier vantail 6v entre ses états fermé et ouvert ou ouvert primaire, selon un mouvement comprenant un mouvement initial d'écartement du premier vantail 6v de la première bride 5.

Dans une réalisation, ce mouvement initial d'écartement est un mouvement au moins sensiblement de translation initiale le long d'un axe au moins sensiblement orthogonal à la première ouverture 4, à la première bride 5 et à la position du premier vantail 6v à l'état fermé (figures 3, 8B, 9B, 11, 15).

Dans une autre réalisation, ce mouvement initial d'écartement est un mouvement de rotation initiale autour d'un axe au moins sensiblement parallèle à la première ouverture 4, à la première bride 5 et à la position du premier vantail 6v à l'état fermé (figures 17, 23).

De façon non moins générale, les moyens porteurs 11a et les moyens de manoeuvre de déplacement 11b sont agencés pour être aptes à déplacer le premier vantail 6v entre ses états fermé et ouvert ou ouvert primaire et ouvert final, selon un mouvement comprenant un mouvement initial d'écartement du premier vantail 6v de la première bride 5, comme il vient d'être indiqué, et au moins un mouvement ultérieur qui est un mouvement ultérieur de translation et/ou au moins un mouvement ultérieur de rotation.

Ce mouvement ultérieur de translation ou de rotation peut faire l'objet de plusieurs réalisations.

Dans une réalisation, l'axe de translation du mouvement ultérieur de translation est un axe au moins sensiblement rectiligne.

Par exemple, cet axe de translation peut être au moins sensiblement parallèle à la première ouverture 4, à la première bride 5 et à la position du premier vantail 6v à l'état fermé (figure 12).

Ou, cet axe de translation peut être sensiblement orthogonal à la première ouverture 4, à la première bride 5 et à la position du premier vantail 6v à l'état fermé (figure 16).

Ou, selon une autre réalisation non représentée, cet axe de translation peut être incliné par rapport à la première ouverture 4, à la première bride 5 et à la position du premier vantail 6v à l'état fermé.

Dans une autre réalisation, l'axe de translation du mouvement ultérieur de translation est un axe curviligne (figures 22 et 23).

Dans une autre réalisation, le mouvement ultérieur est une rotation autour d'un axe.

Par exemple, cet axe de rotation peut être au moins sensiblement parallèle à la première ouverture 4, à la première bride 5 et à la position du premier vantail 6v à l'état fermé (figures 17, 18, 19, 20, 21, 22 et 23).

Ou, cet axe de rotation peut être au moins sensiblement orthogonal à la première ouverture 4, à la première bride 5 et à la position du premier vantail 6v à l'état fermé (figures 3, 4, 7C et 7D).

La structure et l'agencement des moyens porteurs 11a et des moyens de manoeuvre de déplacement 11b sont adaptés à la cinématique recherchée.

Ainsi, les moyens porteurs 11a et les moyens de manoeuvre de déplacement 11b comprennent des moyens d'écartement initial du premier vantail 6v de la première bride 5 qui sont des moyens de translation le long d'un axe au moins sensiblement orthogonal à la première ouverture 4, à la première bride 5 et à la position du premier vantail 6v à l'état fermé, ou des moyens de rotation autour d'un axe au moins sensiblement parallèle à la première ouverture 4, à la première bride 5 et à la position du premier vantail 6v à l'état fermé, comme précédemment indiqué.

De même, les moyens porteurs 11a et les moyens de manoeuvre de déplacement 11b comprennent de tels moyens d'écartement initial du premier vantail 6v et de la première bride 5 et des moyens de déplacement ultérieur qui sont des moyens de translation et/ou des moyens de rotation, comme précédemment indiqué.

Le premier vantail 6v est prolongé latéralement en saillie, de façon au moins sensiblement coplanaire, par une ou plusieurs platines 15 faisant partie des moyens porteurs 11a et permettant le déplacement du premier vantail 6v, suite à la mise en oeuvre des moyens de manoeuvre de déplacement 11b.

Selon les réalisations, la première paroi 3 comporte une ou plusieurs lumières traversantes 16 aptes au passage étanche et aseptique des moyens porteurs 11a et/ou des moyens de manoeuvre de déplacement 11b.

On se réfère maintenant plus spécialement aux figures 1 à 9C qui illustrent un premier mode d'exécution de l'enceinte 1 dans une première variante de réalisation.

Dans ce cas, les moyens porteurs 11a et les moyens de manoeuvre de déplacement 11b de la première porte 6 sont agencés pour être aptes à déplacer le premier vantail 6v à partir de son état fermé selon un mouvement comprenant un mouvement initial de translation le long d'un axe au moins sensiblement orthogonal à la première ouverture 4, à la première bride 5 et au premier vantail 6v lorsqu'il se trouve à l'état fermé, et ce afin d'écarter le premier vantail 6v de la première bride comme il a été précédemment indiqué, et au moins un mouvement ultérieur de rotation autour d'un axe au moins sensiblement orthogonal à la première ouverture 4, à la première bride 5 et au premier vantail 6v lorsqu'il se trouve à l'état fermé et ce afin d'amener le premier vantail dans sa position à l'état ouvert ou ouvert primaire ou ouvert final.

Dans la réalisation des figures 7A à 7D, le mouvement de rotation est au moins sensiblement un demi-tour. Dans les réalisations des figures 8A à 8C et 9A à 9C, le mouvement de rotation est au moins sensiblement un quart de tour.

Dans cet état ouvert ou ouvert primaire ou ouvert final, le premier vantail est disposé dans une position latérale par rapport à la première ouverture 4, à la première bride 5 et au premier vantail 6v lorsqu'il se trouve à l'état fermé, cette position étant au moins sensiblement orthogonale à l'axe AA de l'espace d'entrée/sortie 13a, tandis que l'espace d'écartement 12 est situé au-delà de la limite latérale 13c de l'espace d'entrée/sortie 13.

Dans cette première variante de réalisation et ce premier mode d'exécution, les moyens porteurs 11a et les moyens de manoeuvre de déplacement 11b de la première porte 6 comprennent au moins un premier vérin 17 disposé selon un axe au moins sensiblement orthogonal à la première ouverture 4, à la première bride 5 et au premier vantail 6v lorsqu'il se trouve à l'état fermé et assurant le mouvement initial de translation et au moins un système de déplacement à rotation 18 selon un axe au moins sensiblement orthogonal à la première ouverture 4, à la première bride 5 et au premier vantail 6v lorsqu'il se trouve à l'état fermé.

Comme illustré sur les figures 6A, 6B et 6C, un tel système de déplacement à rotation 18 peut comprendre un arbre 18a comportant une lumière profilée ayant une partie axiale 18b et une partie 18c inclinée sur l'axe de l'arbre, avec laquelle coopère un pion 18d.

Dans la réalisation représentée, la course de mouvement initial de translation réalisée à l'aide du premier vérin 17 est celle juste nécessaire, aux jeux nécessaires près, pour permettre d'une part le mouvement ultérieur de rotation, sans que le premier vantail 6v et le second vantail 10v n'interfèrent avec la première paroi 3 de la première enceinte 1 sur sa face intérieure 3b et, d'autre part, que la face intérieure 10b de la seconde porte 10 (ou plus précisément du vantail 10v de la seconde porte 10) se trouve au voisinage de la face intérieure 3b de la première paroi 3, afin de ne pas occuper une partie utile de l'espace intérieur 1a de la première enceinte 1 et de faire en sorte que la ligne critique intérieure LCi de la première porte 6 ouverte soit située vers la face intérieure 3b de la première paroi 3.

Dans la réalisation représentée, la face extérieure 6a du premier vantail 6v dans son état ouvert ou ouvert primaire ou ouvert final est tournée vers et notamment proche de la face intérieure 3b de la première paroi 3 de la première enceinte 1. Ainsi, la face intérieure 10b du second vantail 10v dans son état ouvert ou ouvert primaire ou ouvert final est tournée vers et située à proximité, notamment immédiate, de la face intérieure 3b de la première paroi 3 de la première enceinte 1.

Dans cette première variante de réalisation et ce premier mode d'exécution, le premier vantail 6v de la première porte 6 est prolongé latéralement par une platine 15, laquelle est portée au moins sensiblement orthogonalement à l'extrémité de l'arbre 18a, disposé selon un axe au moins sensiblement orthogonal à la première ouverture 4, à la première bride 5 et au premier vantail 6v lorsqu'il se trouve à l'état fermé.

Cet arbre 18a traverse une lumière traversante 16 de la première paroi 3, où sont prévus la lumière profilée 18b, 18c et le pion 18d.

Le premier vérin 17 agit sur l'arbre 18a pour le faire coulisser le long de son axe.

L'arbre 18a est déporté latéralement à l'écart de la première ouverture 4 et de la première bride 5. Il est d'autre part écarté latéralement (parallèlement à la première paroi 3) du premier vantail 6v de la première porte 6 du fait de la présence de la platine 15.

Avec une platine 15 de longueur suffisante et une course de rotation suffisante, il est possible de réaliser un espace d'écartement 12 de taille suffisamment importante, comme indiqué.

Selon une possibilité (figures 8A, 8B et 8C), les vantaux 6v et 10v des deux portes 6 et 10 à l'état ouvert sont simplement situés dans l'espace intérieur 1a de la première enceinte 1, suffisamment éloigné de l'espace d'entrée/sortie 13a, comme indiqué.

Selon une autre possibilité (figures 9A, 9B et 9C), il est prévu dans la première enceinte 1 une cavité de protection 14a des vantaux 6v et 10v des deux portes 6 et 10 à l'état ouvert, alors qu'ils sont plaqués l'un contre l'autre. Une telle cavité de protection 14a est ménagée entre la face intérieure 3b de la première paroi 3 et une paroi de séparation 14 disposée parallèlement et à l'écart d'elle. Une telle cavité de protection 14a comporte une ouverture de passage des deux vantaux 6v et 10v par glissement dans leurs propres plans. Avec une telle structure, la séparation d'écartement est renforcée par une séparation barrière.

On se réfère maintenant plus spécialement aux figures 10 à 13C qui illustrent un second mode d'exécution de l'enceinte 1 dans la même première variante de réalisation.

Dans ce cas, les moyens porteurs 11a et les moyens de manoeuvre de déplacement 11b de la première porte 6 sont agencés pour être aptes à déplacer le premier vantail 6v à partir de son état fermé selon un mouvement comprenant un mouvement initial de translation comme dans le premier mode d'exécution précédemment décrit et au moins un mouvement ultérieur de translation le long d'un axe au moins sensiblement parallèle à la première ouverture 4, à la première bride 5 et au premier vantail 6v lorsqu'il se trouve à l'état fermé et ce afin d'amener le premier vantail dans sa position à l'état ouvert ou ouvert primaire ou ouvert final.

Dans cet état ouvert ou ouvert primaire ou ouvert final, le premier vantail est disposé comme dans le premier mode d'exécution précédemment décrit.

Dans ce second mode d'exécution, les moyens porteurs 11a et les moyens de manoeuvre de déplacement 11b de la première porte 6 comprennent au moins le premier vérin 17 disposé selon un axe au moins sensiblement orthogonal à la première ouverture 4, à la première bride 5 et au premier vantail 6v lorsqu'il se trouve à l'état fermé et assurant le mouvement initial de translation et au moins un second vérin 19 selon un axe au moins sensiblement parallèle à la première ouverture 4, à la première bride 5 et au premier vantail 6v lorsqu'il se trouve à l'état fermé.

Dans la réalisation représentée, la course de mouvement initial de translation réalisée à l'aide du premier vérin 17 est comme celle du premier mode d'exécution précédemment décrit.

Dans la réalisation représentée, la face extérieure 6a du premier vantail 6v dans son état ouvert ou ouvert primaire ou ouvert final est disposée comme dans le premier mode d'exécution précédemment décrit. De même pour les faces du second vantail 10v.

Dans ce second mode d'exécution, le premier vantail 6v de la première porte 6 est également prolongé latéralement par au moins une platine 15, laquelle est portée au moins sensiblement orthogonalement par le premier vérin 17 traversant une lumière traversante 16 de la première paroi 3.

Le premier vérin 17 est porté par le second vérin 19.

On se réfère maintenant plus spécialement aux figures 14 à 16 qui illustrent une deuxième variante de réalisation de l'enceinte 1.

Dans ce cas, les moyens porteurs 11a et les moyens de manoeuvre de déplacement 11b de la première porte 6 sont agencés pour être aptes à déplacer le premier vantail 6v à partir de son état fermé selon un mouvement comprenant au moins un mouvement de translation le long d'un axe au moins sensiblement orthogonal à la première ouverture 4, à la première bride 5 et au premier vantail 6v lorsqu'il se trouve à l'état fermé, et ce afin d'écarter le premier vantail 6v de la première bride puis d'amener le premier vantail dans sa position à l'état ouvert ou ouvert primaire ou ouvert final.

Dans cet état ouvert ou ouvert primaire ou ouvert final, le premier vantail est disposé dans une position au moins sensiblement en regard de la première ouverture 4, de la première bride 5 et du premier vantail 6v lorsqu'il se trouve à l'état fermé, cette position étant au moins sensiblement orthogonale à l'axe AA de l'espace d'entrée/sortie 13a, tandis que l'espace d'écartement 12 est situé au-delà de la limite d'extrémité distale 13b de l'espace d'entrée/sortie 13a.

Dans cette réalisation les moyens porteurs 11a et les moyens de manoeuvre de déplacement 11b de la première porte 6 comprennent au moins un vérin 20 disposé selon un axe au moins sensiblement orthogonal à la première ouverture 4, à la première bride 5 et au premier vantail 6v lorsqu'il se trouve à l'état fermé et assurant tant le mouvement initial de translation et que le mouvement ultérieur de translation.

La course de mouvement de translation est celle nécessaire à la réalisation de l'espace d'écartement 12.

Dans la réalisation représentée, la face extérieure 6a du premier vantail 6v dans son état ouvert ou ouvert primaire ou ouvert final est tournée vers et éloignée de la première ouverture 4, de la première bride 5 et du premier vantail 6v lorsqu'il se trouve à l'état fermé. Ainsi, la face intérieure 10b du second vantail 10v dans son état ouvert ou ouvert primaire ou ouvert final est tournée vers et elle-aussi éloignée de la première ouverture 4, de la première bride 5 et du premier vantail 6v lorsqu'il se trouve à l'état fermé.

Dans la réalisation représentée, le premier vantail 6v de la première porte 6 est prolongé latéralement par une platine 15, laquelle est portée au moins sensiblement orthogonalement à l'extrémité du vérin 20. Préférentiellement, il est prévu deux platines 15 diamétralement opposées et deux vérins 20.

On se réfère maintenant plus spécialement aux figures 17 à 21 qui illustrent une troisième variante de réalisation de l'enceinte 1.

Dans ce cas, les moyens porteurs 11a et les moyens de manoeuvre de déplacement 11b de la première porte 6 sont agencés pour être aptes à déplacer le premier vantail 6v à partir de son état fermé selon un mouvement de rotation autour d'un axe au moins sensiblement parallèle à la première ouverture 4, à la première bride 5 et au premier vantail 6v lorsqu'il se trouve à l'état fermé, et ce afin d'écarter le premier vantail 6v de la première bride puis d'amener le premier vantail 6v dans sa position à l'état ouvert ou ouvert primaire ou ouvert final.

Dans cet état ouvert ou ouvert primaire ou ouvert final, le premier vantail est disposé dans une position latérale par rapport à la première ouverture 4, à la première bride 5 et au premier vantail 6v lorsqu'il se trouve à l'état fermé, cette position étant au moins sensiblement orthogonale à l'axe AA de l'espace d'entrée/sortie 13a, tandis que l'espace d'écartement 12 est situé au-delà de la limite latérale 13c de l'espace d'entrée/sortie 13a.

Dans cette réalisation les moyens porteurs 11a et les moyens de manoeuvre de déplacement 11b de la première porte 6 comprennent au moins un système de déplacement à rotation 21 selon un axe 21a au moins sensiblement parallèle à la première ouverture 4, à la première bride 5 et au premier vantail 6v lorsqu'il se trouve à l'état fermé et assurant tant le mouvement initial que le mouvement ultérieur de rotation.

Le système de déplacement à rotation 21 comprend une charnière d'axe 21a et un moyen d'entrainement à rotation autour de l'axe 21a.

La course de mouvement de rotation est voisine d'un demi-tour.

Dans la réalisation représentée, la face extérieure 6a du premier vantail 6v dans son état ouvert ou ouvert primaire ou ouvert final est tournée vers l'opposé de la face intérieure 3b de la première paroi 3 de la première enceinte 1. Ainsi, la face intérieure 10b du second vantail 10v dans son état ouvert ou ouvert primaire ou ouvert final est tournée vers et située à proximité, notamment immédiate, de la face intérieure 3b de la première paroi 3 de la première enceinte 1.

Dans la réalisation représentée, le premier vantail 6v de la première porte 6 est prolongé latéralement par une platine 15, laquelle est portée par l'articulation du système de déplacement à rotation 21.

Avec une platine 15 de longueur suffisante, il est possible de réaliser un espace d'écartement 12 de taille suffisamment importante, comme indiqué.

On se réfère maintenant plus spécialement aux figures 22 et 23 qui illustrent une quatrième variante de réalisation de l'enceinte 1.

Dans ce cas, les moyens porteurs 11a et les moyens de manoeuvre de déplacement 11b de la première porte 6 sont agencés pour être aptes à déplacer le vantail à partir de son état fermé selon un mouvement comprenant un mouvement de translation le long d'un axe curviligne 22 correspondant au moins sensiblement à un arc de cercle d'axe 23 au moins sensiblement parallèle à la première ouverture 4, à la première bride 5 et au premier vantail 6v lorsqu'il se trouve à l'état fermé.

Dans cette réalisation, les moyens porteurs 11a et les moyens de manoeuvre de déplacement 11b de la première porte 6 comprennent au moins un système à parallélogramme déformable 24 selon l'axe 23 déporté latéralement par rapport à la première ouverture 4, à la première bride 5 et au premier vantail 6v lorsqu'il se trouve à l'état fermé.

Par exemple, la course de mouvement de rotation du parallélogramme déformable 24 est de l'ordre d'un demi-tour.

Dans la réalisation représentée, la face extérieure 6a du premier vantail 6v dans son état ouvert ou ouvert primaire ou ouvert final est tournée vers la face intérieure 3b de la première paroi 3 de la première enceinte 1. Ainsi, la face intérieure 10b du second vantail 10v dans son état ouvert ou ouvert primaire ou ouvert final est tournée vers et située à proximité, notamment immédiate, de la face intérieure 3b de la première paroi 3 de la première enceinte 1.

Avec un axe 23 suffisamment déporté latéralement par rapport à la première ouverture 4, à la première bride 5 et au premier vantail 6v lorsqu'il se trouve à l'état fermé, il est possible de réaliser un espace d'écartement 12 de taille suffisamment importante, comme indiqué.

## Revendications

1. Enceinte (1), spécialement destinée adaptée à être associée à un dispositif de jonction étanche avec une seconde enceinte (2), comportant :
▪ une structure incluant une paroi (3) fermée limitant un espace intérieur (1a),
▪ au moins une ouverture (4) ménagée dans la paroi (3) et limitée par une bride (5) annulaire dont la face extérieure (5a) est adaptée pour assurer le plaquage hermétique sur elle-même de la face extérieure (9a) d'une seconde bride (9) complémentaire appartenant à la seconde enceinte (2),
▪ des moyens de maintien amovible, associés au moins pour partie à la bride (5), adaptés pour maintenir de façon amovible la bride (5) et la seconde bride (9) plaquées l'une contre l'autre par leurs faces extérieures (5a et 9a),
▪ une porte (6) supportée par la structure par l'intermédiaire de moyens porteurs (11a) mobiles ou déformables, dont le vantail (6v) est agencé et monté de façon adaptée pour pouvoir être déplacé pour se trouver soit à l'état fermé où il coopère avec la bride (5) en fermant l'ouverture (4) soit à l'état ouvert où il est dégagé de la bride (5) et placé dans l'espace intérieur (1a) en ouvrant l'ouverture (4), et dont la face extérieure (6a) est adaptée pour assurer le plaquage hermétique sur elle-même de la face extérieure (10a) du vantail (10v) d'une seconde porte (10) complémentaire appartenant à la seconde enceinte (2),
▪ des moyens de solidarisation amovible associés au moins pour partie à la porte (6), adaptés pour maintenir de façon amovible le vantail (6v) et le second vantail (10v) plaqués l'un contre l'autre par leurs faces extérieures (6a et 10a),
▪ des moyens de manoeuvre de déplacement (11b) adaptés pour déplacer le vantail (6v) entre ses états fermé et ouvert, et des moyens de commande des moyens de manoeuvre de déplacement (11b),
▪ et, lorsque le vantail (6v) est à l'état ouvert, l'entrée/la sortie de l'enceinte (1) étant dégagée, un espace d'entrée/sortie (13a) dans/de l'espace intérieur, en forme générale de tronc de cylindre s'étendant dans l'espace intérieur axialement à partir de l'ouverture (4) et de la bride (5), cet espace d'entrée/sortie (13a) faisant partie d'un espace de communication entre les deux enceintes associées et étant adapté pour permettre de faire passer un certain contenu dans/hors de l'espace intérieur, de l'une à l'autre des deux enceintes (1, 2),
▪ une ligne critique annulaire intérieure (LCi) de risque de contamination existant sur la face extérieure (6a) du vantail (6v) en contact avec le milieu extérieur et non recouverte par la face extérieure (10a) du vantail (10v), lorsque les vantaux (6v et 10v) sont plaqués l'un contre l'autre,
**caractérisée par le fait que** :
▪ les moyens porteurs (11a) et les moyens de manoeuvre de déplacement (11b) sont agencés de manière qu'à l'état ouvert du vantail (6v), le vantail (6v) soit espacé au-delà de la limite (13b, 13c) de l'espace d'entrée/sortie (13a), un espace d'écartement (12) vide étant ainsi ménagé entre l'espace d'entrée/sortie (13a) et le vantail (6v) à l'état ouvert, au-delà de la limite latérale (13c) et de la limite d'extrémité distale (13b) de l'espace d'entrée/sortie (13a) opposée à l'ouverture (4) et à la bride (5),
▪ les moyens porteurs (11a) et les moyens de manoeuvre de déplacement (11b), structurellement intégrés à la porte (6), constituent des moyens de protection contre les risques de contamination pour la ligne critique intérieure (LCi) constitués par l'espace d'écartement (12) de taille appropriée formé et placé entre l'espace d'entrée/sortie (13a) et la ligne critique annulaire intérieure (LCi), de sorte que le vantail (6v) soit normalement non atteignable par le certain contenu lors de son passage dans l'espace d'entrée/sortie (13a).

2. Enceinte (1) selon la revendication 1, **caractérisée par le fait que** la porte (6) est supportée par l'intermédiaire de moyens porteurs (11a), de sorte que le vantail (6v) est agencé et monté de façon adaptée pour pouvoir être déplacé pour se trouver à l'état ouvert soit dans un état ouvert primaire où est ménagé un espace d'écartement primaire soit dans un état ouvert final où est ménagé un espace d'écartement final, plus grand que l'espace d'écartement primaire.

3. Enceinte (1) selon l'une quelconque des revendications 1 et 2, **caractérisée par le fait qu'**elle comporte également une paroi de séparation fixe (14) ou mobile (25) qui, à l'état ouvert du vantail (6v), est placée et s'étend, au moins pour partie, entre le vantail (6v) et l'espace d'entrée/sortie (13a), en particulier une paroi de séparation (14, 25), mobile, associée structurellement à la porte (6) et/ou à ses moyens porteurs (11a) ou moyens de manoeuvre de déplacement (11b).

4. Enceinte (1) selon l'une quelconque des revendications 1 à 3, **caractérisée par le fait qu'**à l'état ouvert du vantail (6v), le vantail (6v) est disposé dans une position parallèle ou orthogonale à l'ouverture (4), à la bride (5) et à la position du vantail (6v) à l'état fermé, ou dans une position au moins sensiblement orthogonale ou au moins sensiblement parallèle à l'axe de l'espace d'entrée/sortie (13a).

5. Enceinte (1) selon l'une quelconque des revendications 1 à 4, **caractérisée par le fait qu'**à l'état ouvert du vantail (6v), le vantail (6v) est disposé dans une position en regard de l'ouverture (4), de la bride (5) et de la position du vantail (6v) à l'état fermé, ou .dans une position latérale par rapport à l'ouverture (4), à la bride (5) et à la position du vantail (6v) à l'état fermé.

6. Enceinte (1) selon l'une quelconque des revendications 1 à 5, **caractérisée par le fait que** les moyens porteurs (11a) et les moyens de manoeuvre de déplacement (11b) de la porte (6) sont agencés pour être adaptés pour déplacer le vantail (6v) entre ses états fermé et ouvert ou ouvert primaire, selon un mouvement comprenant un mouvement initial d'écartement du vantail (6v) de la bride (5) qui est un mouvement au moins sensiblement de translation initiale le long d'un axe orthogonal à l'ouverture (4), à la bride (5) et à la position du vantail (6v) à l'état fermé, ou un mouvement de rotation initiale autour d'un axe parallèle à l'ouverture (4), à la bride (5) et à la position du vantail (6v) à l'état fermé.

7. Enceinte (1) selon la revendication 6, **caractérisée par le fait que** les moyens porteurs (11a) et les moyens de manoeuvre de déplacement (11b) de la porte (6) sont agencés pour être adaptés pour déplacer le vantail (6v) entre ses états fermé et ouvert ou ouvert primaire et ouvert final, selon un mouvement comprenant un mouvement initial d'écartement du vantail (6v) de la bride (5) et au moins un mouvement ultérieur qui est un mouvement ultérieur de translation et/ou au moins un mouvement ultérieur de rotation.

8. Enceinte (1) selon la revendication 7, **caractérisée par le fait que** les moyens porteurs (11a) et les moyens de manoeuvre de déplacement (11b) de la porte (6) sont agencés pour être adaptés pour déplacer le vantail (6v) selon un mouvement ultérieur de translation le long d'un axe de translation rectiligne ou curviligne.

9. Enceinte (1) selon la revendication 7, **caractérisée par le fait que** les moyens porteurs (11a) et les moyens de manoeuvre de déplacement (11b) de la porte (6) sont agencés pour être adaptés pour déplacer le vantail (6v) selon un mouvement ultérieur de rotation autour d'un axe parallèle à l'ouverture (4), à la bride (5) et à la position du vantail (6v) à l'état fermé.

10. Enceinte (1) selon la revendication 7, **caractérisée par le fait que** les moyens porteurs (11a) et les moyens de manoeuvre de déplacement (11b) de la porte (6) sont agencés pour être adaptés pour déplacer le vantail (6v) selon un mouvement ultérieur de rotation autour d'un axe orthogonal à l'ouverture (4), à la bride (5) et à la position du vantail (6v) à l'état fermé.

11. Enceinte (1) selon l'une quelconque des revendications 1 à 10, **caractérisée par le fait que** les moyens porteurs (11a) et les moyens de manoeuvre de déplacement (11b) de la porte (6) comprennent des moyens d'écartement initial du vantail (6v) de la bride (5) qui sont des moyens de translation le long d'un axe orthogonal à l'ouverture (4), à la bride (5) et à la position du vantail (6v) à l'état fermé, ou des moyens de rotation autour d'un axe parallèle à l'ouverture (4), à la bride (5) et à la position du vantail (6v) à l'état fermé.

12. Enceinte (1) selon l'une quelconque des revendications 1 à 10, en ce qu'elles dépendent de la revendication 7, **caractérisée par le fait que** les moyens porteurs (11a) et les moyens de manoeuvre de déplacement (11b) de la porte (6) comprennent des moyens d'écartement initial du vantail (6v) de la bride (5) et des moyens de déplacement ultérieur qui sont des moyens de translation et/ou des moyens de rotation et, le cas échéant des moyens de déplacement ultérieur de translation le long d'un axe de translation rectiligne ou curviligne, ou des moyens de rotation ultérieure autour d'un axe parallèle à l'ouverture (4), à la bride (5) et à la position du vantail (6v) à l'état fermé, ou des moyens de rotation ultérieure autour d'un axe orthogonal à l'ouverture (4), à la bride (5) et à la position du vantail (6v) à l'état fermé.

13. Enceinte (1) selon l'une quelconque des revendications 1 à 12, **caractérisée par le fait que** le vantail (6v) de la porte (6) est prolongé latéralement en saillie, de façon coplanaire, par au moins une platine (15) faisant partie des moyens porteurs (11a) et permettant le déplacement du vantail (6v) par suite de la mise en oeuvre des moyens de manoeuvre de déplacement (11b).

14. Enceinte (1) selon l'une quelconque des revendications 1 à 13, **caractérisée par le fait que** la paroi (3) comporte une ou plusieurs lumières traversantes (16) adaptées pour le passage étanche et aseptique des moyens porteurs (11a) et/ou des moyens de manoeuvre de déplacement (11b) de la porte (6).

15. Enceinte (1) selon l'une quelconque des revendications 1 à 14, **caractérisée par le fait que** les moyens porteurs (11a) et les moyens de manoeuvre de déplacement (11b) de la porte (6) sont agencés pour être adaptés pour déplacer le vantail (6v) à partir de son état fermé selon un mouvement comprenant un mouvement initial de translation le long d'un axe orthogonal à l'ouverture (4), à la bride (5) et à la position du vantail (6v) à l'état fermé, pour écarter le vantail (6v) de la bride (5), et au moins un mouvement ultérieur de translation le long d'un axe parallèle à l'ouverture (4), à la bride (5) et à la position du vantail (6v) à l'état fermé et/ou un mouvement de rotation autour d'un axe orthogonal à l'ouverture (4), à la bride (5) et à la position du vantail (6v) à l'état fermé, pour amener le vantail (6v) dans sa position à l'état ouvert ou ouvert primaire ou ouvert final où il est alors disposé dans une position latérale par rapport à l'ouverture (4), à la bride (5) et à la position du vantail (6v) à l'état fermé, orthogonale à l'axe de l'espace d'entrée/sortie (13a), l'espace d'écartement (12) étant situé au-delà de la limite latérale de l'espace d'entrée/sortie (13a).

16. Enceinte (1) selon l'une quelconque des revendications 1 à 14, **caractérisée par le fait que** les moyens porteurs (11a) et les moyens de manoeuvre de déplacement (11b) de la porte (6) sont agencés pour être adaptés pour déplacer le vantail (6v) à partir de son état fermé selon un mouvement comprenant au moins un mouvement de translation le long d'un axe orthogonal à l'ouverture (4), à la bride (5) et à la position du vantail (6v) à l'état fermé, pour écarter le vantail (6v) de la bride (5) puis amener le vantail (6v) dans sa position à l'état ouvert, ouvert primaire, ouvert final, où il est alors disposé dans une position en regard de l'ouverture (4), de la bride (5) et de la position du vantail (6v) à l'état fermé, orthogonale à l'axe de l'espace d'entrée/sortie (13a), l'espace d'écartement (12) étant situé au-delà de la limite d'extrémité de l'espace d'entrée/sortie (13a) opposée à l'ouverture (4) et à la bride (5).

17. Enceinte (1) selon l'une quelconque des revendications 1 à 14, **caractérisée par le fait que** les moyens porteurs (11a) et les moyens de manoeuvre de déplacement (11b) de la porte (6) sont agencés pour être adaptés pour déplacer le vantail (6v) à partir de son état fermé selon un mouvement comprenant un mouvement de rotation autour d'un axe parallèle à l'ouverture (4), à la bride (5) et à la position du vantail (6v) à l'état fermé, pour amener le vantail (6v) dans sa position à l'état ouvert ou ouvert primaire ou ouvert final où il est alors disposé dans une position latérale par rapport à l'ouverture (4), à la bride (5) et à la position du vantail (6v) à l'état fermé, orthogonale à l'axe de l'espace d'entrée/sortie (13a), l'espace d'écartement (12) étant situé au-delà de la limite latérale de l'espace d'entrée/sortie (13a).

18. Enceinte (1) selon l'une quelconque des revendications 1 à 14, **caractérisée par le fait que** les moyens porteurs (11a) et les moyens de manoeuvre de déplacement (11b) de la porte (6) sont agencés pour être adaptés pour déplacer le vantail (6v) à partir de son état fermé selon un mouvement comprenant un mouvement de translation le long d'un axe curviligne (22) correspondant à un arc de cercle d'axe (23) parallèle à l'ouverture (4), à la bride (5) et à la position du vantail (6v) à l'état fermé.

19. Enceinte (1) selon l'une quelconque des revendications 1 à 18, spécialement destinée au domaine biopharmaceutique, **caractérisée par** une ouverture (4) ayant un diamètre supérieur à 40 centimètres.

20. Système de jonction étanche entre une première enceinte (1) et une seconde enceinte (2) isolées du milieu extérieur, comprenant une première enceinte (1) selon l'une quelconque des revendications 1 à 19 et en ce que la seconde enceinte (2) comporte :
▪ une seconde structure incluant une seconde paroi (7) fermée limitant un second espace intérieur,
▪ au moins une seconde ouverture (4) ménagée dans la seconde paroi (7) et limitée par une seconde bride (9) annulaire dont la face extérieure (9a) est adaptée pour être plaquée de façon hermétique sur la face extérieure (5a) de la première bride (5) complémentaire appartenant à la première enceinte (1),
▪ des moyens de maintien amovible, associés au moins pour partie à la seconde bride (9), adaptés pour maintenir de façon amovible la seconde bride (9) et la première bride (5) plaquées l'une contre l'autre par leurs faces extérieures (9a et 5a),
▪ une seconde porte (10) dont le vantail (10v) est agencé et monté de façon adaptée pour pouvoir être déplacé pour se trouver soit à l'état fermé où il coopère avec la seconde bride (9) en fermant la seconde ouverture (8) soit à l'état ouvert où il est dégagé de la seconde bride (9) en ouvrant la seconde ouverture (8), et dont la face extérieure (6a) est adaptée pour être plaquée de façon hermétique sur la face extérieure (6a) du vantail (6v) de la première porte (6) complémentaire appartenant à la première enceinte (1),
▪ des moyens de solidarisation amovible associés au moins pour partie à la seconde porte (10), adaptés pour maintenir de façon amovible le vantail (10v) de la seconde porte (10) et le vantail (6v) de la première porte (6) plaqués l'un contre l'autre par leurs faces extérieures (10a et 6a),
▪ de telle sorte que lorsque les vantaux (6v et 10v) de la première porte (6) et de la seconde porte (10) sont à l'état ouvert, la première enceinte (1) et la seconde enceinte (2) communiquent entre elles par leurs ouvertures (4 et 8), un espace de communication (13) incluant l'espace d'entrée/sortie (13a) étant ménagé entre les deux enceintes (1 et 2) et permettant de faire passer un certain contenu de l'une à l'autre,
▪ une ligne critique annulaire intérieure (LCi) de risque de contamination existant sur le vantail (6v) de la première porte (6) et une ligne critique annulaire extérieure (LCe) de risque de contamination existant sur la seconde bride (9), les moyens porteurs (11a) et les moyens de manoeuvre de déplacement (11b) de la première porte (6), structurellement intégrés à la première porte (6), sont tels que lorsque le vantail (6v) de la première porte (6) et le vantail (10v) de la seconde porte (10) sont à l'état ouvert, un espace de séparation d'écartement (12) se présentant sous la forme d'un espace vide de taille appropriée soit formé et placé entre l'espace de communication (13) et la ligne critique annulaire intérieure (LCi), le vantail (6v) de la première porte (6) étant écarté de l'espace d'entrée/sortie (13a).

21. Système de jonction étanche entre une première enceinte (1) et une seconde enceinte (2) isolées du milieu extérieur, selon la revendication 20, **caractérisé par le fait qu'**il comporte également des moyens structurellement intégrés à la seconde bride (9), adaptés - lorsque les vantaux (6v et 10v) de la première porte (6) et de la seconde porte (10) sont à l'état ouvert - pour former une séparation entre l'espace de communication et la ligne critique annulaire extérieure (LCe).

22. Système de jonction étanche entre une première enceinte (1) et une seconde enceinte (2) isolées du milieu extérieur, selon l'une quelconque des revendications 20 et 21, **caractérisé par le fait que** les moyens structurellement intégrés à la première porte (6) et/ou à la seconde bride (9) sont en totalité intégrés à la première porte (6) et/ou à la seconde bride (9).

23. Dispositif de transfert étanche entre une première enceinte (1) selon l'une quelconque des revendications 1 à 19 et une seconde enceinte (2) isolées du milieu extérieur, comportant un système de jonction étanche entre les deux enceintes selon l'une quelconque des revendications 20 à 22.

## Patentansprüche

1. Gehäuse (1), welches speziell dazu vorgesehen ist, einer Vorrichtung zur dichten Verbindung mit einem zweiten Gehäuse (2) zugeordnet zu sein, umfassend:
- eine Struktur, welche eine geschlossene Wand (3) umfasst, welche einen Innenraum (1a) begrenzt,
- wenigstens eine Öffnung (4), welche in der Wand (3) vorgesehen und durch einen ringförmigen Flansch (5) begrenzt ist, dessen Außenfläche (5a) dazu eingerichtet ist, die hermetische Einfassung der Außenfläche (9a) eines komplementären zweiten Flanschs (9) an sich sicherzustellen, welcher dem zweiten Gehäuse (2) zugehörig ist,
- lösbare Haltemittel, welche wenigstens teilweise dem Flansch (5) zugeordnet sind, dazu eingerichtet, lösbar den Flansch (5) und den zweiten Flansch (9) den einen gegen den anderen durch ihre Außenflächen (5a und 9a) eingefasst zu halten,
- eine Tür (6), welche durch die Struktur durch Vermittlung von beweglichen oder deformierbaren Tragemitteln (11a) gehaltert ist, deren Türflügel (6v) derart eingerichtet und montiert ist, dass er verlagert werden kann, um sich entweder in geschlossenem Zustand, in welchem er mit dem Flansch (5) zum Verschließen der Öffnung (4) zusammenwirkt, oder in offenem Zustand befindet, in welchem er von dem Flansch (5) gelöst und in dem Innenraum (1a) die Öffnung (4) öffnend platziert ist, und deren Außenfläche (6a) dazu eingerichtet ist, das hermetische Einfassen der Außenfläche (10a) des Türblatts (10v) einer komplementären zweiten Tür (10) an sich sicherzustellen, welche dem zweiten Gehäuse (2) zugehörig ist,
- Mittel zum lösbaren Verbinden, welche wenigstens teilweise der Tür (6) zugeordnet sind, welche dazu eingerichtet sind, in lösbarer Weise das Türblatt (6v) und das zweite Türblatt (10v) zu halten, welche gegeneinander durch ihre Außenflächen (6a und 10a) eingefasst sind,
- Mittel zum Betätigen der Verlagerung (11b), welche dazu eingerichtet sind, das Türblatt (6v) zwischen seinem geschlossenen und offenen Zustand zu verlagern, sowie Mittel zum Steuern der Mittel zum Betätigen der Verlagerung (11b),
- und, wenn das Türblatt (6v) in dem offenen Zustand ist, wenn der Eingang/Ausgang des Gehäuses (1) getrennt ist, einen Eingangs-/Ausgangsraum (13a) in/von dem Innenraum im Wesentlichen in Form eines Zylinderstumpfs, welcher sich in dem Innenraum axial ausgehend von der Öffnung (4) und dem Flansch (5) erstreckt, wobei der Eingangs-/Ausgangsraum (13a) einen Teil eines Verbindungsraums zwischen den beiden zugeordneten Gehäusen bildet und dazu eingerichtet ist, einem bestimmten Inhalt zu erlauben, in den Innenraum hinein/aus ihm heraus zu treten, von einem zu dem anderen der beiden Gehäuse (1, 2),
- eine innere ringförmige kritische Linie (LCi) eines Kontaminationsrisikos, welche an der Außenfläche (6a) des Türblatts (6v) in Kontakt mit der äußeren Umgebung vorliegt und nicht durch die Außenfläche (10a) des Türblatts (10v) bedeckt ist, wenn die Türblätter (6v und 10v) aneinander eingefasst sind,
**dadurch gekennzeichnet, dass**:
- die Tragemittel (11a) und die Mittel zum Betätigen der Verlagerung (11b) derart angeordnet sind, dass in dem offenen Zustand des Türblatts (6v) das Türblatt (6v) über die Grenze (13b, 13c) des Eingangs-/Ausgangsraums (13a) hinaus beabstandet ist, wobei somit ein leerer Zwischenraum (12) zwischen dem Eingangs-/Ausgangsraum (13a) und dem Türblatt (6v) in dem offenen Zustand vorgesehen ist, über die laterale Grenze (13c) und die Grenze des distalen Endes (13b) des Eingangs-/Ausgangsraums (13a) hinaus gegenüber der Öffnung (4) und des Flanschs (5),
- die Tragemittel (11a) und die Mittel zum Betätigen der Verlagerung (11b), welche strukturell an der Tür (6) integriert sind, Mittel zum Schutz gegen die Kontaminationsrisiken für die innere kritische Linie (LCi) bilden, welche durch den Zwischenraum (12) von angemessener Größe gebildet sind, welcher zwischen dem Eingangs-/Ausgangsraum (13a) und der inneren ringförmigen kritischen Linie (LCi) gebildet und platziert ist, so dass das Türblatt (6v) normalerweise durch den bestimmten Inhalt während seines Durchgangs durch den Eingangs-/Ausgangsraum (13a) nicht erreichbar ist.

2. Gehäuse (1) nach Anspruch 1, **dadurch gekennzeichnet, dass** die Tür (6) durch Vermittlung von Tragemitteln (11a) derart gehaltert ist, dass das Türblatt (6v) in einer geeigneten Weise angeordnet und montiert ist, um verlagert werden zu können, um sich in dem offenen Zustand entweder in einem primären offenen Zustand, in welchem ein primärer Zwischenraum vorgesehen ist, oder in einem finalen offenen Zustand zu befinden, in welchem ein finaler Zwischenraum vorgesehen ist, welcher größer als der primäre Zwischenraum ist.

3. Gehäuse (1) nach Anspruch 1 oder 2, **dadurch gekennzeichnet, dass** es ferner eine feste (14) oder bewegliche (25) Trennwand umfasst, welche sich in dem offenen Zustand des Türblatts (6v) wenigstens teilweise zwischen dem Türblatt (6v) und dem Eingangs-/Ausgangsraum (13a) befindet und erstreckt, insbesondere eine bewegliche Trennwand (14, 25), welche strukturell der Tür (6) und/oder ihren Tragemitteln (11a) oder Mitteln zum Betätigen der Verlagerung (11b) zugeordnet ist.

4. Gehäuse (1) nach einem der Ansprüche 1 bis 3, **dadurch gekennzeichnet, dass** in dem offenen Zustand des Türblatts (6v) das Türblatt (6v) in einer Position angeordnet ist, welche wenigstens im Wesentlichen parallel oder wenigstens im Wesentlichen orthogonal zu der Öffnung (4), dem Flansch (5) und der Position des Türblatts (6v) in dem geschlossenen Zustand ist, oder in einer Position wenigstens im Wesentlichen orthogonal oder wenigstens im Wesentlichen parallel zu der Achse des Eingangs-/Ausgangsraums (13a).

5. Gehäuse (1) nach einem der Ansprüche 1 bis 4, **dadurch gekennzeichnet, dass** in dem offenen Zustand des Türblatts (6v) das Türblatt (6v) in einer Position angeordnet ist, welche wenigstens im Wesentlichen zu der Öffnung (4), dem Flansch (5) und der Position des Türblatts (6v) in dem geschlossenen Zustand weist, oder in einer lateralen Position bezüglich der Öffnung (4), des Flanschs (5) und der Position des Türblatts (6v) in dem geschlossenen Zustand.

6. Gehäuse (1) nach einem der Ansprüche 1 bis 5, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) zwischen seinem geschlossenen und offenen oder primären offenen Zustand zu verlagern, gemäß einer Bewegung, umfassend eine anfängliche Bewegung eines Trennens des Türblatts (6v) von dem Flansch (5), welche eine Bewegung wenigstens im Wesentlichen einer anfänglichen Translation entlang einer Achse wenigstens im Wesentlichen orthogonal zu der Öffnung (4), dem Flansch (5) und der Position des Türblatts (6v) in dem geschlossenen Zustand ist, oder eine Bewegung einer anfänglichen Rotation um eine Achse wenigstens im Wesentlichen parallel zu der Öffnung (4), dem Flansch (5) und der Position des Türblatts (6v) in dem geschlossenen Zustand.

7. Gehäuse (1) nach Anspruch 6, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) zwischen seinem geschlossenen und offenen oder primären offenen und finalen offenen Zustand zu verlagern, gemäß einer Bewegung, umfassend eine anfängliche Bewegung eines Trennens des Türblatts (6v) von dem Flansch (5) und wenigstens einer nachfolgenden Bewegung, welche eine nachfolgende Bewegung einer Translation ist und/oder wenigstens einer nachfolgenden Bewegung einer Rotation.

8. Gehäuse (1) nach Anspruch 7, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) gemäß einer nachfolgenden Bewegung einer Translation entlang einer Translationsachse zu bewegen, welche wenigstens im Wesentlichen geradlinig oder krummlinig ist.

9. Gehäuse (1) nach Anspruch 7, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) gemäß einer nachfolgenden Bewegung einer Rotation um eine Achse zu verlagern, welche wenigstens im Wesentlichen parallel zu der Öffnung (4), dem Flansch (5) und der Position des Türblatts (6v) in dem geschlossenen Zustand ist.

10. Gehäuse (1) nach Anspruch 7, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) gemäß einer nachfolgenden Bewegung einer Rotation um eine Achse zu verlagern, welche wenigstens im Wesentlichen orthogonal zu der Öffnung (4), dem Flansch (5) und der Position des Türblatts (6v) in dem geschlossenen Zustand ist.

11. Gehäuse (1) nach einem der Ansprüche 1 bis 10, **dadurch gekennzeichnet, dass** die Tragemittel (11a) und die Mittel zum Betätigen der Verlagerung (11b) der Tür (6) Mittel zum anfänglichen Trennen des Türblatts (6v) von dem Flansch (5) umfassen, welche Mittel zur Translation entlang einer Achse sind, welche wenigstens im Wesentlichen orthogonal zu der Öffnung (4), dem Flansch (5) und der Position des Türblatts (6v) in dem geschlossenen Zustand sind, oder Mittel zur Rotation um eine Achse, welche wenigstens im Wesentlichen parallel zu der Öffnung (4), dem Flansch (5) und der Position des Türblatts (6v) in dem geschlossenen Zustand ist.

12. Gehäuse (1) nach einem der Ansprüche 1 bis 10, wenn sie von vom Anspruch 7 abhängen, **dadurch gekennzeichnet, dass** die Tragemittel (11a) und die Mittel zum Betätigen der Verlagerung (11b) der Tür (6) Mittel zum anfänglichen Trennen des Türblatts (6v) von dem Flansch (5) und Mittel zum nachfolgenden Verlagern umfassen, welche Mittel zur Translation und/oder Mittel zur Rotation sind, sowie gegebenenfalls Mittel zum nachfolgenden Verlagern zur Translation entlang einer Translationsachse, welche wenigstens im Wesentlichen geradlinig oder krummlinig ist, oder Mittel zur nachfolgenden Rotation um eine Achse, welche wenigstens im Wesentlichen parallel zu der Öffnung (4), dem Flansch (5) und der Position des Türblatts (6v) in dem geschlossenen Zustand ist, oder Mittel zur nachfolgenden Rotation um eine Achse, welche wenigstens im Wesentlichen orthogonal zu der Öffnung (4), dem Flansch (5) und der Position des Türblatts (6v) in dem geschlossenen Zustand ist.

13. Gehäuse (1) nach einem der Ansprüche 1 bis 12, **dadurch gekennzeichnet, dass** das Türblatt (6v) der Tür (6) lateral vorstehend in einer im Wesentlichen koplanaren Weise mittels wenigstens einer Platine (15) verlängert ist, welche einen Teil der Tragemittel (11a) bildet und die Verlagerung des Türblatts (6v) ermöglicht, indem die Mittel zum Betätigen der Verlagerung (11b) implementiert werden.

14. Gehäuse (1) nach einem der Ansprüche 1 bis 13, **dadurch gekennzeichnet, dass** die Wand (3) einen oder mehrere Durchgangskanäle (16) umfasst, welche für den dichten und aseptischen Durchgang der Tragemittel (11a) und/oder der Mittel zum Betätigen der Verlagerung (11b) der Tür (6) eingerichtet sind.

15. Gehäuse (1) nach einem der Ansprüche 1 bis 14, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) ausgehend von seinem geschlossenen Zustand gemäß einer Bewegung zu verlagern, welche eine anfängliche Bewegung einer Translation entlang einer Achse, welche wenigstens im Wesentlichen orthogonal zu der Öffnung (4), dem Flansch (5) und der Position des Türblatts (6v) in dem geschlossenen Zustand ist, um das Türblatt (6v) von dem Flansch (5) zu trennen, sowie wenigstens eine nachfolgende Bewegung einer Translation entlang einer Achse umfasst, welche wenigstens im Wesentlichen parallel zu der Öffnung (4), dem Flansch (5) und der Position des Türblatts (6v) in dem geschlossenen Zustand ist und/oder eine Bewegung einer Rotation um eine Achse, welche wenigstens im Wesentlichen orthogonal zu der Öffnung (4), dem Flansch (5) und der Position des Türblatts (6v) in dem geschlossenen Zustand ist, um das Türblatt (6v) in seine Position in dem offenen oder primären offenen oder finalen offenen Zustand zu bringen, wo es schließlich in einer Position lateral bezüglich der Öffnung (4), des Flanschs (5) und der Position des Türblatts (6v) in dem geschlossenen Zustand angeordnet ist, wenigstens im Wesentlichen orthogonal zu der Achse des Eingangs-/Ausgangsraums (13a), wobei der Zwischenraum (12) jenseits der lateralen Grenze des Eingangs-/Ausgangsraums (13a) angeordnet ist.

16. Gehäuse (1) nach einem der Ansprüche 1 bis 14, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) ausgehend von seinem geschlossenen Zustand gemäß einer Bewegung zu verlagern, welche wenigstens eine Bewegung einer Translation entlang einer Achse umfasst, welche wenigstens im Wesentlichen orthogonal zu der Öffnung (4), dem Flansch (5) und der Position des Türblatts (6v) in dem geschlossenen Zustand ist, um das Türblatt (6v) von dem Flansch (5) zu trennen und dann das Türblatt (6v) in seine Position in dem offenen, primären offenen, finalen offenen Zustand zu bringen, wo es schließlich in einer Position angeordnet ist, welche wenigstens im Wesentlichen zu der Öffnung (4), dem Flansch (5) und der Position des Türblatts (6v) in dem geschlossenen Zustand weist, wenigstens im Wesentlichen orthogonal zu der Achse des Eingangs-/Ausgangsraums (13a), wobei der Zwischenraum (12) jenseits der Grenze des Endes des Eingangs-/Ausgangsraums (13a) gegenüber der Öffnung (4) und dem Flansch (5) angeordnet ist.

17. Gehäuse (1) nach einem der Ansprüche 1 bis 14, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) ausgehend von seinem geschlossenen Zustand gemäß einer Bewegung zu verlagern, welche eine Bewegung einer Rotation um eine Achse umfasst, welche wenigstens im Wesentlichen parallel zu der Öffnung (4), dem Flansch (5) und der Position des Türblatts (6v) in dem geschlossenen Zustand ist, um das Türblatt (6v) in seine Position in dem offenen oder primären offenen oder finalen offenen Zustand zu bringen, wo es schließlich in einer Position lateral bezüglich der Öffnung (4), des Flanschs (5) und der Position des Türblatts (6v) in dem geschlossenen Zustand angeordnet ist, wenigstens im Wesentlichen orthogonal zu der Achse des Eingangs-/Ausgangsraums (13a), wobei der Zwischenraum (12) jenseits der lateralen Grenze des Eingangs-/Ausgangsraums (13a) angeordnet ist.

18. Gehäuse (1) nach einem der Ansprüche 1 bis 14, **dadurch gekennzeichnet, dass** die Tragemittel (11a) und die Mittel zum Betätigen der Verlagerung (11b) der Tür (6) dazu eingerichtet sind, in der Lage zu sein, das Türblatt (6v) ausgehend von seinem geschlossenen Zustand gemäß einer Bewegung zu verlagern, welche eine Bewegung einer Translation entlang einer krummlinigen Achse (22) umfasst, welche wenigstens im Wesentlichen einem Kreisbogen um eine Achse (23) entspricht, welche wenigstens im Wesentlichen parallel zu der Öffnung (4), dem Flansch (5) und der Position des Türblatts (6v) in dem geschlossenen Zustand ist.

19. Gehäuse (1) nach einem der Ansprüche 1 bis 18, speziell für den biopharmazeutischen Bereich vorgesehen, **gekennzeichnet durch** eine Öffnung (4) mit einem Durchmesser größer als 40 Zentimeter.

20. System zum dichten Verbinden zwischen einem ersten Gehäuse (1) und einem zweiten Gehäuse (2), welche von der äußeren Umgebung isoliert sind, umfassend ein erstes Gehäuse (1) nach einem der Ansprüche 1 bis 19, und wobei das zweite Gehäuse (2) umfasst:
- eine zweite Struktur, welche eine zweite geschlossene Wand (7) umfasst, welche einen zweiten Innenraum begrenzt,
- wenigstens eine zweite Öffnung (4), welche in der zweiten Wand (7) vorgesehen und durch einen zweiten ringförmigen Flansch (9) begrenzt ist, dessen Außenfläche (9a) dazu eingerichtet ist, in hermetischer Weise an der Außenfläche (5a) des komplementären Flanschs (5) eingefasst zu sein, welcher dem ersten Gehäuse (1) zugehörig ist,
- lösbare Haltemittel, welche wenigstens teilweise dem zweiten Flansch (9) zugeordnet sind, dazu eingerichtet, lösbar den zweiten Flansch (9) und den ersten Flansch (5) den einen gegen den anderen durch ihre Außenflächen (9a und 5a) eingefasst zu halten,
- eine zweite Tür (10), deren Türblatt (10v) derart eingerichtet und montiert ist, dass es verlagert werden kann, um sich entweder in geschlossenem Zustand, in welchem es mit dem zweiten Flansch (9) zum Verschließen der zweiten Öffnung (8) zusammenwirkt, oder in offenem Zustand befindet, in welchem es von dem zweiten Flansch (9) zum Öffnen der zweiten Öffnung (8) gelöst ist, und deren Außenfläche (6a) dazu eingerichtet ist, in hermetischer Weise an der Außenfläche (6a) des Türblatts (6v) der komplementären ersten Tür (6) eingefasst zu sein, welche dem ersten Gehäuse (1) zugehörig ist,
- Mittel zum lösbaren Verbinden, welche wenigstens teilweise der zweiten Tür (10) zugeordnet sind, welche dazu eingerichtet sind, in lösbarer Weise das Türblatt (10v) der zweiten Tür (10) und das Türblatt (6v) der ersten Tür (6) zu halten, welche gegeneinander durch ihre Außenflächen (10a und 6a) eingefasst sind,
- so dass, wenn die Türblätter (6v und 10v) der ersten Tür (6) und der zweiten Tür (10) in dem offenen Zustand sind, das erste Gehäuse (1) und das zweite Gehäuse (2) miteinander durch ihre Öffnungen (4 und 8) verbunden sind, wobei ein Verbindungsraum (13), welcher den Eingangs-/Ausgangsraum (13a) umfasst, zwischen den beiden Gehäusen (1 und 2) vorgesehen ist und ein Durchlassen eines bestimmten Inhalts von einem zu dem anderen erlaubt,
- eine innere ringförmige kritische Linie (LCi) eines Kontaminationsrisikos, welche an dem Türblatt (6v) der ersten Tür (6) vorliegt, und eine äußere ringförmige kritische Linie (LCe) eines Kontaminationsrisikos an dem zweiten Flansch (9), den Tragemitteln (11a) und den Mitteln zum Betätigen der Verlagerung (11b) der ersten Tür (6) vorliegt, strukturell integral mit der ersten Tür (6), so dass während das Türblatt (6v) der ersten Tür (6) und das Türblatt (10v) der zweiten Tür (10) in dem offenen Zustand sind, ein Raum zum Trennen des Einfassens (12), welcher in Form eines leeren Raums mit geeigneter Größe vorliegt, zwischen dem Verbindungraum (13) und der inneren ringförmigen kritischen Linie (LCi) gebildet und platziert ist, wobei das Türblatt (6v) der ersten Tür (6) von dem Eingangs-/Ausgangsraum (13a) getrennt ist.

21. Vorrichtung zum dichten Verbinden zwischen einem ersten Gehäuse (1) und einem zweiten Gehäuse (2), welche von der äußeren Umgebung isoliert sind, nach Anspruch 20, **dadurch gekennzeichnet, dass** es ferner strukturell mit dem zweiten Flansch (9) integrale Mittel umfasst, welche dazu eingerichtet sind, während die Türblätter (6v und 10v) der ersten Tür (6) und der zweiten Tür (10) in dem offenen Zustand sind, eine Trennung zwischen dem Verbindungsraum und der äußeren ringförmigen kritischen Linie (LCe) zu bilden.

22. Vorrichtung zum dichten Verbinden zwischen einem ersten Gehäuse (1) und einem zweiten Gehäuse (2), welche von der äußeren Umgebung isoliert sind, nach einem der Ansprüche 20 und 21, **dadurch gekennzeichnet, dass** die mit der ersten Tür (6) und/oder dem zweiten Flansch (9) strukturell integralen Mittel vollständig mit der ersten Tür (6) und/oder dem zweiten Flansch (9) integral sind.

23. Vorrichtung zum dichten Transport zwischen einem ersten Gehäuse (1) nach einem der Ansprüche 1 bis 19 und einem zweiten Gehäuse (2), welche von der äußeren Umgebung isoliert sind, umfassend eine Vorrichtung zum dichten Verbinden zwischen zwei Gehäusen nach einem der Ansprüche 20 bis 22.

## Claims

1. Specially designed chamber (1) that is suitable for being combined with a sealed junction device with a second chamber (2), having:
- A structure that includes a closed wall (3) that borders an inside space (1a),
- At least one opening (4) made in the wall (3) and bordered by an annular flange (5) whose outside surface (5a) is adapted to ensure the hermetically-sealed flattening onto itself of the outside surface (9a) of a second complementary flange (9) that is part of the second chamber (2),
- Removable holding means, at least partly combined with the flange (5), adapted to hold - in a removable way - the flange (5) and the second flange (9) that are flattened against one another by their outside surfaces (5a and 9a),
- A door (6) supported by the structure by means of movable or deformable carrying means (11a), the panel (6v) of which is arranged and mounted so as to be adapted to be moved to be either in the closed state where it works with the flange (5) while closing the opening (4) or in the open state where it is separated from the flange (5) and placed in the inside space (1a) while opening the opening (4), and whose outside surface (6a) is adapted to ensure the hermetically-sealed flattening onto itself of the outside surface (10a) of the panel (10v) of a second complementary door (10) that is part of the second chamber (2),
- Removable interlocking means at least partly combined with the door (6), adapted to hold - in a removable way - the panel (6v) and the second panel (10v) that are flattened against one another by their outside surfaces (6a and 10a),
- Movement actuation means (11b) adapted to move the panel (6v) between its closed and open states, and means for monitoring the movement actuation means (11b),
- And, when the panel (6v) is in the open state, the entrance/exit of the chamber (1) being separated, an entrance/exit space (13a) in/of the inside space, in the general shape of a truncated cylinder that extends into the inside space axially from the opening (4) and the flange (5), this entrance/exit space (13a) being part of a communication space between the two combined chambers and being adapted to make it possible to pass certain contents into/out of the inside space, from one to the other of the two chambers (1, 2),
- An inside critical line (LCi) of contamination risk existing on the outside surface (6a) of the panel (6v) in contact with the external environment and not overlapped by the outside surface (10a) of the panel (10v), when the panels (6v and 10v) are flattened against one another,
**characterized by the fact that:**
- The carrying means (11a) and the movement actuation means (11b) are arranged so that in the open state of the panel (6v), the panel (6v) is separated beyond the boundary (13b, 13c) of the entrance/exit space (13a), an empty separation space (12) thus being made between the entrance/exit space (13a) and the panel (6v) in the open state, beyond the lateral boundary (13c) and the distal end boundary (13b) of the entrance/exit space (13a) opposite the opening (4) and the flange (5),
- The carrying means (11a) and the movement actuation means (11b), structurally integrated into the door (6), constitute means for protection against the risks of contamination for the inside critical line (LCi), constituted by the separation space (12) of appropriate size formed and placed between the entrance/exit space (13a) and the inside critical annular line (LCi), so that the certain contents normally cannot reach the panel (6v) during their passage into the entrance/exit space (13a).

2. Chamber (1) according to Claim 1, wherein the door (6) is supported by carrying means (11a), so that the panel (6v) is arranged and mounted so as to be adapted to be moved to be in the open state either in a primary open state where a primary separation space is made or in a final open state where a final separation space is made that is larger than the primary separation space.

3. Chamber (1) according to either of Claims 1 and 2, wherein it also comprises a stationary separation wall (14) or movable separation wall (25) that, in the open state of the panel (6v), is placed and extends, at least partly, between the panel (6v) and the entrance/exit space (13a), in particular a movable separation wall (14, 25), structurally combined with the door (6) and/or with its carrying means (11a) or movement actuation means (11b).

4. Chamber (1) according to any one of Claims 1 to 3, wherein in the open state of the panel (6v), the panel (6v) is placed in a position parallel or orthogonal to the opening (4), the flange (5), and the position of the panel (6v) in the closed state, or in a position orthogonal or parallel to the axis of the entrance/exit space (13a).

5. Chamber (1) according to any one of Claims 1 to 4, wherein in the open state of the panel (6v), the panel (6v) is placed in a position facing the opening (4), the flange (5), and the position of the panel (6v) in the closed state, or in a lateral position in relation to the opening (4), the flange (5), and the position of the panel (6v) in the closed state.

6. Chamber (1) according to any one of Claims 1 to 5, wherein the carrying means (11a) and the movement actuation means (11b) of the door (6) are arranged to be adapted to move the panel (6v) between its closed and open or primary open states, in a movement comprising an initial movement of separation of the panel (6v) from the flange (5), which is a movement of initial translation along an axis that is orthogonal to the opening (4), the flange (5), and the position of the panel (6v) in the closed state, or a movement of initial rotation around an axis that is parallel to the opening (4), the flange (5), and the position of the panel (6v) in the closed state.

7. Chamber (1) according to Claim 6, wherein the carrying means (11a) and the movement actuation means (11b) of the door (6) are arranged to be adapted to move the panel (6v) between its closed and open or primary open and final open states, in a movement comprising an initial movement of separation of the panel (6v) from the flange (5), and at least a subsequent movement that is a subsequent translational movement and/or at least a subsequent rotational movement.

8. Chamber (1) according to Claim 7, wherein the carrying means (11a) and the movement actuation means (11b) of the door (6) are arranged to be adapted to move the panel (6v) in a subsequent translational movement along an axis of translation that is rectilinear or curvilinear.

9. Chamber (1) according to Claim 7, wherein the carrying means (11a) and the movement actuation means (11b) of the door (6) are arranged to be adapted to move the panel (6v) in a subsequent rotational movement around an axis that is parallel to the opening (4), the flange (5), and the position of the panel (6v) in the closed state.

10. Chamber (1) according to Claim 7, wherein the carrying means (11a) and the movement actuation means (11b) of the door (6) are arranged to be adapted to move the panel (6v) in a subsequent rotational movement around an axis that is orthogonal to the opening (4), the flange (5), and the position of the panel (6v) in the closed state.

11. Chamber (1) according to any one of Claims 1 to 10, wherein the carrying means (11a) and the movement actuation means (11b) of the door (6) comprise means for initial separation of the panel (6v) from the flange (5) that are means of translation along an axis that is orthogonal to the opening (4), the flange (5), and the position of the panel (6v) in the closed state, or means of rotation around an axis that is parallel to the opening (4), the flange (5), and the position of the panel (6v) in the closed state.

12. Chamber (1) according to any one of Claims 1 to 10, in that they are dependent on Claim 17, wherein the carrying means (11a) and the movement actuation means (11b) of the door (6) comprise means for initial separation of the panel (6v) from the flange (5) and subsequent movement means that are translational means and/or rotational means, and, if applicable, means for subsequent translational movement along an axis of translation that is rectilinear or curvilinear, or means for subsequent rotation around an axis that is parallel to the opening (4), the flange (5), and the position of the panel (6v) in the closed state, or means for subsequent rotation around an axis that is orthogonal to the opening (4), the flange (5), and the position of the panel (6v) in the closed state.

13. Chamber (1) according to any one of Claims 1 to 12, wherein the panel (6v) of the door (6) is laterally extended in projection, in a coplanar fashion, by at least one mechanism plate (15) that is part of the carrying means (11a) and that makes possible the movement of the panel (6v) as a result of the implementation of the movement actuation means (11b).

14. Chamber (1) according to any one of Claims 1 to 13, wherein the wall (3) comprises one or more through slots (16) suited to the sealed and aseptic passage of the carrying means (11a) and/or of the movement actuation means (11b) of the door (6).

15. Chamber (1) according to any one of Claims 1 to 14, wherein the carrying means (11a) and the movement actuation means (11b) of the door (6) are arranged to be adapted to move the panel (6v) from its closed state in a movement comprising an initial translational movement along an axis that is orthogonal to the opening (4), the flange (5), and the position of the panel (6v) in the closed state, to separate the panel (6v) from the flange (5), and at least a subsequent translational movement along an axis that is parallel to the opening (4), the flange (5), and the position of the panel (6v) in the closed state, and/or a rotational movement around an axis that is orthogonal to the opening (4), the flange (5), and the position of the panel (6v) in the closed state, to bring the panel (6v) into its position in the open or primary open or final open state where it is then placed in a lateral position in relation to the opening (4), the flange (5), and the position of the panel (6v) in the closed state, orthogonal to the axis of the entrance/exit space (13a), the separation space (12) being located beyond the lateral boundary of the entrance/exit space (13a).

16. Chamber (1) according to any one of Claims 1 to 14, wherein the carrying means (11a) and the movement actuation means (11b) of the door (6) are arranged to be adapted to move the panel (6v) from its closed state in a movement comprising at least a translational movement along an axis that is orthogonal to the opening (4), the flange (5), and the position of the panel (6v) in the closed state, to separate the panel (6v) from the flange (5), and then to bring the panel (6v) into its position in the open, primary open, or final open state, where it is then placed in a position facing the opening (4), the flange (5), and the position of the panel (6v) in the closed state, orthogonal to the axis of the entrance/exit space (13a), the separation space (12) being located beyond the end boundary of the entrance/exit space (13a) opposite the opening (4) and the flange (5).

17. Chamber (1) according to any one of Claims 1 to 14, wherein the carrying means (11a) and the movement actuation means (11b) of the door (6) are arranged to be adapted to move the panel (6v) from its closed state in a movement comprising a rotational movement around an axis that is parallel to the opening (4), the flange (5), and the position of the panel (6v) in the closed state, to bring the panel (6v) into its position in the open or primary open or final open state where it is then placed in a lateral position in relation to the opening (4), the flange (5), and the position of the panel (6v) in the closed state, orthogonal to the axis of the entrance/exit space (13a), the separation space (12) being located beyond the lateral boundary of the entrance/exit space (13a).

18. Chamber (1) according to any one of Claims 1 to 14, wherein the carrying means (11a) and the movement actuation means (11b) of the door (6) are arranged to be adapted to move the panel (6v) from its closed state in a movement comprising a translational movement along a curvilinear axis (22) corresponding to an arc with an axis (23) that is parallel to the opening (4), the flange (5), and the position of the panel (6v) in the closed state.

19. Chamber (1) according to any one of Claims 1 to 18, particularly designed for the biopharmaceutical field, **characterized by** an opening (4) having a diameter that is larger than 40 centimeters.

20. Sealed junction device between a first chamber (1) and a second chamber (2) that are isolated from the external environment, comprising the first chamber (1) according to any one of Claims 1 to 19 and, wherein the second chamber (2) comprises:
- A second structure that includes a second closed wall (7) that borders a second inside space,
- At least a second opening (4) made in the second wall (7) and bordered by a second annular flange (9) whose outside surface (9a) is adapted to be flattened, hermetically-sealed, onto the outside surface (5a) of the first complementary flange (5) that is part of the first chamber (1),
- Removable holding means, at least partly combined with the second flange (9), adapted to hold - in a removable way - the second flange (9) and the first flange (5) flattened against one another by their outside surfaces (9a and 5a),
- A second door (10) whose panel (10v) is arranged and mounted so as to be adapted to be moved to be either in the closed state where it works with the second flange (9) while closing the second opening (8) or in the open state where it is separated from the second flange (9) while opening the second opening (8), and whose outside surface (6a) is adapted to be flattened, hermetically-sealed, onto the outside surface (6a) of the panel (6v) of the first complementary door (6) that is part of the first chamber (1),
- Removable interlocking means at least partly combined with the second door (10), adapted to hold - in a removable way - the panel (10v) of the second door (10) and the panel (6v) of the first door (6) that are flattened against one another by their outside surfaces (10a and 6a),
- So that when the panels (6v and 10v) of the first door (6) and the second door (10) are in the open state, the first chamber (1) and the second chamber (2) are in communication with one another by their openings (4 and 8), a communication space (13) that includes the entrance/exit space (13a) being made between the two chambers (1 and 2) and making it possible to pass certain contents from one to the other,
- An inside critical annular line (LCi) of contamination risk existing on the panel (6v) of the first door (6) and an outside critical annular line (LCe) of contamination risk existing on the second flange (9), the carrying means (11a) and the movement actuation means (11b) of the first door (6), structurally integrated into the first door (6), are such that when the panel (6v) of the first door (6) and the panel (10v) of the second door (10) are in the open state, a separation space (12) appearing in the form of an empty space of appropriate size is formed and placed between the communication space (13) and the inside critical annular line (LCi), the panel (6v) of the first door (6) being separated from the entrance/exit space (13a).

21. Sealed junction system between a first chamber (1) and a second chamber (2) that are isolated from the external environment, according to Claim 20, wherein it also comprises means that are structurally integrated into the second flange (9), adapted-when the panels (6v and 10v) of the first door (6) and the second door (10) are in the open state - to form a separation between the communication space and the outside critical annular line (LCe).

22. Sealed junction system between a first chamber (1) and a second chamber (2) that are isolated from the external environment, according to either of Claims 20 and 21, wherein the means that are structurally integrated into the first door (6) and/or into the second flange (9) are fully integrated into the first door (6) and/or the second flange (9).

23. Sealed transfer system between a first chamber (1) according to any one of Claims 1 to 19 and a second chamber (2) that are isolated from the external environment, comprising a sealed junction system between the two chambers according to any one of Claims 20 to 22.
